# EUROPÄISCHE PATENTANMELDUNG

(11) **EP 4 339 489 A1**
(43) Veröffentlichungstag der Anmeldung: **20.03.2024**
(21) Anmeldenummer: 22196298.8
(22) Anmeldetag: 19.09.2022
(51) Int. Cl.: F16H 57/08, F16H 57/023

(54) **INDUSTRIEGETRIEBE MIT VERSCHLEISSMINDERNDER ZWISCHENELEMENTANORDNUNG SOWIE VERFAHREN UND VERWENDUNG**

(71) Anmelder: Flender GmbH, 46395 Bocholt (DE)
(72) Erfinder: Fingerle, Thorsten, 46395 Bocholt (DE); Lohmann, Christoph, 46395 Bocholt (DE); Lensing, Volker, 46395 Bocholt (DE); Kleine-Brockhoff, Ralf, 46395 Bocholt (DE)
(74) Vertreter: Michalski Hüttermann & Partner Patentanwälte mbB

(57) **Zusammenfassung**

Die vorliegende Erfindung betrifft ein Industriegetriebe (100) aufweisend wenigstens eine Achse (101) und wenigstens eine Achsaufnahme (103) zur axialfesten Lagerung der Achse, wobei die Achse in wenigstens einem Axialabschnitt (X1, X2) in der Achsaufnahme axialfest gelagert ist; wobei zwischen Achsaufnahme (103) und Achse (101) wirkend im/in dem wenigstens einen Axialabschnitt eine verschleißmindernde Zwischenelementanordnung (10) vorgesehen ist, welche axialfest zwischen Achse und Achsaufnahme gelagert ist, wobei die Zwischenelementanordnung in zumindest einem Oberflächenabschnitt (10.1a, 10.1b) seitens der Achse und/oder seitens der Achsaufnahme eine strukturierte Oberfläche (10.1) aufweist und dadurch eingerichtet ist zur form- und/oder kraftschlüssigen Abstützung gegen axiale Verlagerung oder alternativ oder zusätzlich ein Verkleben oder ein kegeliger Presssitz oder dergleichen Verbindung vorgesehen ist. Die vorliegende Erfindung betrifft ferner auch entsprechende verschleißmindernde Zwischenelemente mit strukturierten Oberflächen für eine solche Zwischenelementanordnung sowie Herstellungsverfahren dafür und deren Verwendung insbesondere in Planetengetrieben.

## Beschreibung

### TECHNISCHES GEBIET

Die vorliegende Erfindung betrifft ein Industriegetriebe aufweisend wenigstens eine Achse und wenigstens eine Achsaufnahme zur axialfesten Lagerung der Achse, wobei die Achse in wenigstens einem Axialabschnitt in der Achsaufnahme axialfest gelagert ist, wahlweise in zwei Axialabschnitten insbesondere jeweils an einem freien Ende der Achse gelagert ist, wobei zwischen Achsaufnahme und Achse wirkend im/in dem wenigstens einen Axialabschnitt eine verschleißmindernde Zwischenelementanordnung vorgesehen ist, insbesondere mit dem Industriegetriebe in Ausgestaltung als Planetengetriebe oder umfassend wenigstens eine Planetengetriebestufe. Ferner betrifft die vorliegende Erfindung auch verschleißmindernde Zwischenelemente mit vorteilhafterweise strukturierten Oberflächen für eine solche Zwischenelementanordnung. Insbesondere betrifft die vorliegende Erfindung ein Industriegetriebe gemäß Merkmalen des unabhängigen Vorrichtungsanspruchs sowie Verfahren und Verwendungen gemäß den nebengeordneten Ansprüchen.

### HINTERGRUND DER ERFINDUNG

Hohe Leistungsdichten in (Industrie-)Getrieben wie z.B. Planetengetrieben, Windenergieanlagengetrieben bzw. -triebsträngen erfordern hinreichende Steifigkeiten insbesondere auch der drehmomentführenden Komponenten sowie entsprechender Befestigungen und Einspannungen. Speziell in Planetengetrieben neigen Achseinspannungen an Planetenträgern mit Multiplaneten unter Last insbesondere bei Unterschreitung ausreichender Pressung zu nachteiligen Mikrobewegungen, wodurch potentiell spürbar erhöhter Verschleiß hervorgerufen wird. Es wurde nun erkannt, dass derartige lokale Mikrobewegungen (und damit einher gehender Verschleiß) in Abhängigkeit von einem leistungsdichte-induzierten Steifigkeitsverlust umgebender Bauteile zunehmend wahrscheinlicher werden. Demnach besteht großes Interesse daran, diese Mikrobewegungen möglichst vollständig unterbinden zu können.

Bisher werden Achseinspannungen in dieser Hinsicht durch Verlängerung der Einspannlänge (insbesondere bei nachteiligen Bauraumanforderungen) und/oder durch Erhöhung der Passung und damit ansteigender Pressung im Kontaktbereich zwischen Achse und Achsaufnahme (insbesondere Bohrung) realisiert. In Abhängigkeit der Belastung können sich die Bereiche rund um die Achseinspannungen jedoch elastisch deformieren, insbesondere auch in einem Planetenträger. Dies wirkt sich insbesondere bei dünnwandigen Komponenten potentiell sehr negativ insbesondere auf benachbarte Lagersitze aus. Nachteilig ist dabei auch ein sich selbst verstärkender Negativ-Effekt aus einem sich mehr und mehr lockernden bzw. weitenden Presssitz, was in der Folge zu noch größeren Verschiebungen bzw. Relativbewegungen im Kontaktbereich führt, wodurch wiederum mehr Material bzw. Abrieb durch Reibverschleiß erzeugt wird. Durch Verschleiß freigesetzte Partikel führen potentiell zu großen oder noch größeren Sekundärschäden, beispielsweise durch Abrasion, wodurch die Lebensdauer des Getriebes potentiell sehr stark sinkt.

Es besteht demnach ein großes Interesse an einer Minimierung des Verschleißes insbesondere im Zusammenhang mit den hier beschriebenen Eigenheiten von Industriegetrieben, speziell auch in Planetengetrieben insbesondere bei vergleichsweise hohen oder dynamischen Belastungen wie z.B. in Triebsträngen von Windenergieanlagen.

### ZUSAMMENFASSUNG DER ERFINDUNG

Es ist die Aufgabe der vorliegenden Erfindung, Maßnahmen aufzuzeigen, mittels welchen eine spürbare Verschleißminderung an einer Schnittstelle von Achse zu Achsaufnahme in Industriegetrieben sichergestellt werden kann, insbesondere bei Minimierung von dadurch begründeten etwaigen konstruktiven Nachteilen betreffend die gesamte Getriebekonstruktion. Insbesondere besteht die Aufgabe auch darin, eine axialfeste Lagerung an der Schnittstelle Achse/Achsaufnahme für eine hochbelastbare Drehmomentübertragung bzw. für eine im Bedarfsfall besonders hohe Flächenpressung bei möglichst variantenreicher Verwendbarkeit in unterschiedlichen Getriebearten bereitzustellen, insbesondere auch in Planetengetrieben.

Die Lösung der Aufgabe erfolgt durch ein Industriegetriebe mit den Merkmalen des Anspruchs 1, durch eine Zwischenelementanordnung hergestellt gemäß den Merkmalen des entsprechenden nebengeordneten Verfahrensanspruchs und durch entsprechende Verwendungen gemäß den Merkmalen des entsprechenden nebengeordneten Verwendungsanspruchs. Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine besonders verschleißmindernde Lagerung von wenigstens einer Achse in einem (Industrie-)Getriebe, beispielsweise in einem Planetengetriebe.

Bereitgestellt wird insofern ein Industriegetriebe (insbesondere mit wenigstens einer Planetengetriebestufe) aufweisend wenigstens eine Achse und wenigstens eine Achsaufnahme zur axialfesten Lagerung der Achse, wobei die Achse in wenigstens einem Axialabschnitt in der Achsaufnahme axialfest gelagert ist, wahlweise in zwei Axialabschnitten insbesondere jeweils an einem freien Ende der Achse gelagert ist; wobei zwischen Achsaufnahme und Achse wirkend im/in dem wenigstens einen Axialabschnitt eine verschleißmindernde Zwischenelementanordnung vorgesehen ist, welche axialfest zwischen Achse und Achsaufnahme gelagert ist (insbesondere in der Art eines Presssitzes, Presspassung). Dies erweitert die Lagerungsoptionen und ermöglicht nicht zuletzt auch eine Individualisierung und Aussteifung und Lebensdauererhöhung auf einfache Weise. Erfindungsgemäß wird demnach vorgeschlagen, eine verschließmindernde Maßnahme durch wenigstens ein zusätzliches Zwischenelement der Zwischenelementanordnung zu realisieren.

Vorteilhaft weist die verschleißmindernde Zwischenelementanordnung in zumindest einem Oberflächenabschnitt seitens der Achse (innen) und/oder seitens der Achsaufnahme (außen) eine strukturierte Oberfläche auf und ist dadurch eingerichtet zur form- und/oder kraftschlüssigen Abstützung gegen axiale Verlagerung (also gegen axiale Relativbewegungen zwischen Achse und Achsaufnahme). Dabei kann die Funktion einer axialfesten Verankerung durch eine zusätzliche zwischen Achse und Achsaufnahme wirkende Zwischenelementanordnung bzw. durch wenigstens ein Zwischenelement der Zwischenelementanordnung bereitzustellen. Dies ermöglicht nicht zuletzt eine individuellere und unabhängigere Optimierung dieser mechanisch vergleichsweise stark belasteten Schnittstelle, insbesondere hinsichtlich Vermeidung von Mikrobewegungen, insbesondere indem im Vergleich zum Direktkontakt zwischen Achse und Achsaufnahme wenigstens eine weitere individualisierbare Kontaktfläche für Form- und/oder Kraftschluss bereitgestellt wird. Eine solche Achseinspannung mit Zwischenelementanordnung bietet dabei auch zahlreiche weitere auch indirekte Vorteile, wie z.B. eine größere Variabilität/Flexibilität bei der Auswahl der Werkstoffe, oder auch einen schlankeren/kostengünstigeren Fertigungsansatz betreffend Achse und Achsaufnahme. Besonders vorteilhafte Anwendungsbereiche ergeben sich beispielsweise für Windkraftgeneratorgetriebe mit Gleitlagerung, für Industriegetriebe mit Planetengetriebestufen, für reine Planetenradgetriebe und zahlreiche weitere Industrieanwendungen.

Vorteilhaft ist die auf der Innen- und/oder Außenmantelfläche vorgesehene Strukturierung bereits für sich als solche konstituierend für den gewünschten Kraft-/Formschluss an der entsprechenden Kontaktmantelfläche. Eine derartige Strukturierung ist insbesondere im Zusammenhang mit einem/dem Kriterium einer robusten und konstruktiv vergleichsweise schlanken axialfesten Lagerung bzw. eines entsprechenden axialfesten Verbauens (Montageverfahren) zweckdienlich. Alternativ oder zusätzlich zur Strukturierung kann/können ein Verkleben, ein kegeliger Presssitz oder die weiteren hier im Einzelnen beschriebenen Verbindungsarten vorgesehen sein.

Bevorzugt ist einerseits wenigstens eine vergleichsweise grobe und im Wesentlichen formschlüssig wirkende Oberflächenstruktur vorgesehen, bei welcher durch Formschluss eine axiale Relativbewegung ausgeschlossen werden kann, und andererseits ist bevorzugt auch wenigstens eine vergleichsweise feine und im Wesentlichen kraft-/haftreibschlüssig wirkende Oberflächenstruktur vorgesehen, welcher durch hohe Haftreibung eine axiale Relativbewegung ausgeschlossen werden kann.

Vorteilhaft ist die form-/kraftschlüssig wirkende Oberflächenstruktur sowohl innen als auch außen vorgesehen, so dass eine Fixierung gegen axiale Verlagerung/Relativbewegung wahlweise ausschließlich mittels des wenigstens einen Zwischenelements beispielsweise auch in Ausgestaltung als Hülse sichergestellt werden kann.

Dabei hat sich speziell bei Planetengetrieben auch gezeigt, dass die schwächere und somit verschleißgefährdetere Komponente (bzw. eine besonders schwache Komponente) in der Regel die Achsaufnahme ist (bzw. eine entsprechende Planetenträgerbohrung), welche sich aufgrund der Dimension der Achsaufnahmen bzw. des Planetenträgers und dessen Beschaffenheit nur aufwändig im Verschleißschutz ertüchtigen lässt. Auch in dieser Hinsicht ermöglicht die Erfindung eine Überwindung bisheriger Schwierigkeiten.

Als "Industriegetriebe" ist dabei allgemein eine Getriebevorrichtung für industrielle Anwendungen zu verstehen, beispielsweise in Ausgestaltung als (Kegel)Stirnrad- oder Planetengetriebe oder Schneckenextrudergetriebe oder Schiffsgetriebe oder Generatorgetriebe oder Baggergetriebe oder Mühlengetriebe oder Fahrwerksgetriebe jeweils mit wenigstens einer Getriebestufe. Beispielsweise umfasst ein hier beschriebenes Industriegetriebe wenigstens eine Planetengetriebestufe.

Als "axialfeste Lagerung der Achse" ist dabei allgemein ein fester Achssitz zu verstehen, bei welchem ein robuster Halt insbesondere auch gegen axiale Relativbewegungen sichergestellt sein muss.

Im Folgenden wird von einer Zwischenelementanordnung oder alternativ einem einzelnen Zwischenelement gesprochen, wobei die entsprechende Offenbarung jeweils analog gilt. Eine Zwischenelementanordnung kann dabei wahlweise auch mehrere (Zwischen)Elemente umfassen, wohingegen bei expliziter Bezugnahme auf nur ein Zwischenelement hier auf ein einzelnes Element hingewiesen wird (Zwischenelementanordnung mit nur einem Zwischenelement an der entsprechenden Lagerstelle), sofern nicht ausdrücklich anders erwähnt. Freilich kann ein Industriegetriebe mehrere Lagerstellen bzw. mehrere Achsen mit jeweils einem oder mehreren Zwischenelementen aufweisen, beispielsweise bei einem Planetengetriebe mit Planetenträger, welcher eine Achsaufnahme für eine Vielzahl von Planentenachsen bereitstellt; auch insofern ist der Begriff "Zwischenelementanordnung" nicht auf eine bestimmte Anzahl von (Zwischen)Elementen beschränkt.

Mit anderen Worten basiert die Erfindung auch auf dem Konzept, wenigstens ein Zwischenelement bereitzustellen, welches den Verschleißschutz einer/der Achsaufnahme, z.B. einer (Planeten)Trägerbohrung auf individualisierbare und anwendungsspezifische Weise sicherstellen kann, z.B. durch Vorgabe einer bestimmten Oberflächenstruktur und/oder Materialhärte. Das wenigstens eine Zwischenelement der Zwischenelementanordnung ist bevorzugt als elastisches, naturhartes, nitriertes oder gehärtetes Zwischenelement bereitgestellt, z.B. in der Art bzw. in einer Anordnung bzw. Funktionsweise gemäß einer Buchse. Das (jeweilige) Zwischenelement verbessert dabei die Verschleißfestigkeit speziell in wenigstens einer Einspannstelle der Achse, und zwar weitgehend unabhängig vom Grundmaterial. Das Zwischenelement kann dabei auch aus einer oder mehreren Lagen unterschiedlicher Werkstoffe bestehen. Dabei bieten harte Lagen einen vorteilhaft ausgeprägten Verschleißschutz, während weiche Lagen vornehmlich auch eine elastische Verformung sicherstellen können, insbesondere ohne dabei zu fließen. Insofern kann eine entsprechend gewählte Werkstoffkombination auch eine vorteilhafte funktionale Integration in nur ein einzelnes Zwischenelement ermöglichen (mehrfache Funktion). Der Fachmann kann dabei für den jeweiligen Anwendungsfall insbesondere in Abhängigkeit der Materialien von Achse und Aufnahme individuell bestimmen, welche Härtebereichen jeweils als relativ hart und als relativ weich zu erachten sind.

Das wenigstens eine Zwischenelement weist bevorzugt auf wenigstens einer Außen(mantel)fläche eine formschlüssig wirkende Strukturierung auf, welche eingerichtet ist, einer axialen Relativbewegung entgegenzuwirken, insbesondere ohne dass eine axiale Relativbewegung auftritt. Es hat sich gezeigt, dass eine derartige nach außen flächig wirkende Struktur dabei sowohl bzw. in erster Linie formschlüssig bevorzugt an wenigstens einer radial außenliegenden Oberfläche als auch kraft-/haftreibschlüssig bevorzugt an wenigstens einer radial innenliegenden Oberfläche durch/aufgrund entsprechender Strukturierung (z.B. Laserstrukturierung, Nanostruktur, reibwerterhöhende Strukturen) einem axialen Herausverlagern aus der Achsbohrung (bzw. einer entsprechenden axialen Relativbewegung) effektiv entgegenwirken kann (wahlweise kann zusätzlich auch eine stoffschlüssige Fixierung vorgesehen sein, im Sinne einer zusätzlichen Sicherung, ohne dass diese Sicherung für hohen Kraftfluss aufkommen muss). Das entsprechende Zwischenelement kann dabei wahlweise auch (einfach) konisch, mehrfach konisch insbesondere in der Art eines Dübels, oder in einer Wellenform ausgeführt sein/werden.

Auf der Innenseite des (jeweiligen) Zwischenelementes kann dabei gemäß einer beispielhaften Art der Implementierung durch Erhöhung des Reibwertes und/oder durch eine keilförmige oder schraubenförmige Oberfläche beispielsweise auch die von Achse und Bohrung bzw. Aufnahme gebildete Passung gespreizt werden, wodurch auch die Verformung der Trägerbaugruppe unter Belastung reduziert werden kann. Dabei kann die Innenseite einem unkontrollierten Reibverschleiß entgegenwirken. Durch die Strukturierung kann dabei auch eine nicht auflösbare (nicht zurückverformbare) vergleichsweise harte Oberflächenstruktur geschaffen werden, welche die zuvor üblicherweise durch Präzisionsbearbeitung erreichten Toleranzen (bzw. die für eine jeweilige Anwendung geforderten Toleranzen) der Achse nicht oder allenfalls nur unwesentlich beeinträchtigt.

Dabei kann eine der hier beschriebenen Strukturierungs-Arten wahlweise auf dem jeweiligen Zwischenelement oder auch auf der Achse erfolgen bzw. vorgesehen sein und kann über den Umfang und/oder axial in der Belastungs- und Bewegungsrichtung in Zonen aufgeteilt sein und entsprechend stärker, schwächer, hemmend oder in Fügerichtung reduziert wirkend ausgelegt bzw. konfiguriert/konfektioniert sein. Innerhalb dieser Zonen können insbesondere eine Liniendichte, die Richtung der Struktur und/oder die Intensität und Form der Struktur auf spezifische Eigenheiten und Anforderungen des jeweiligen Achskontaktes angepasst werden. Auch insofern liefert die vorliegende Erfindung einen vergleichsweise hohen Variabilitätsgrad.

Das Zwischenelement kann beispielsweise in der Art eines integrierten Anlaufflächenelements (bzw. als Element mit integrierter Anlauffläche) für Gleitlagerungen zwischen einem Planetenrad und einem Planetenträger verbaut sein und dabei z.B. durchgehend, geschlitzt oder segmentiert ausgeführt sein. Dabei kann z.B. auch eine ballig vorprofilierte Form der Auflage etwaige insbesondere durch den Montagevorgang begründete Deformationen ausgleichen. Insofern kann das Zwischenelement auch im Sinne eines Ausgleichselementes wirkend implementiert sein/werden.

Das Zwischenelement kann auch einseitig verdickt oder verjüngt sein, insbesondere zwecks Ausgleichs von Positionstoleranzen der Achsaufnahmen (bzw. Trägerbohrungen) durch Orientierung bei der Montage. Dies führt nicht zuletzt auch zu verbesserten Tragfähigkeiten der Trägerbaugruppe. Alternativ können die Achsbohrungen auch im bereits montierten Zustand der Zwischenelemente vorgenommen werden. Insofern liefert die vorliegende Erfindung auch eine technisch realisierbare Lösung für unterschiedliche Montagesituationen.

Um beispielsweise eine Verformung zu erleichtern, kann das Zwischenelement (z.B. in Ausgestaltung als eine Art Dübel) geschlitzt, gelocht oder segmentiert sein, gehärtet oder nitriert sein, und dabei mit und ohne montageerleichternde Beschichtung ausgeführt sein/werden. Auch diesbezüglich sind die hier beschriebenen Ausführungsbeispiele nicht einschränkend zu verstehen.

Die Achsaufnahme bzw. Trägerbohrung kann dabei wahlweise zylindrisch gerade, konisch oder ballig geformt oder mit wahlweise auch Nuten zur axialen und/oder tangentialen Sicherung des jeweiligen Zwischenelementes ausgeführt sein/werden.

Die Achsaufnahme bzw. ein zu strukturierender Achssitz kann dabei vorzugsweise zylindrisch oder auch konisch, schraubenförmig oder wellenförmig ausgeführt sein/werden, insbesondere auch in Hinblick auf eine gegen Verdrehung selbsthemmende Ausgestaltung. Alternativ oder zusätzlich kann durch Laser- oder Nanostrukturierung, durch Strukturierung auf chemische Weise oder wahlweise auch durch Rändelungsmaßnahmen (Formgebung entsprechend einer Rändelung) der Reibwert in wenigstens einem Axialabschnitt oder auf wenigstens einem Oberflächenabschnitt innen und/oder außen erhöht werden. Insbesondere bei dem Risiko einer Relativbewegung nach axial außen kann dadurch eine insbesondere proportional wirkende Haftreibungskraft zusätzlich erhöht werden.

An den Enden der jeweiligen Achsaufnahme bzw. an Bohrungsenden können vorteilhaft stetig abnehmende Radialkräfte durch ein balliges Kammprofil sichergestellt werden (Kammspitzen geglättet), wobei ein Sicherungsring eingespart werden kann, und wobei auch der verfügbare Bauraum für die Achseinspannung verlängert/vergrößert werden kann und optional zur weiteren Ausnutzung an Klemmlänge bzw. Presssitzfläche vorteilhaft herangezogen werden kann. Die Zwischenelemente können dabei wie erwähnt an wenigstens einer Seite der Achseinspannung Anwendung finden, wahlweise in gleicher oder voneinander abweichender Ausgestaltung. Dabei können durch das jeweilige Zwischenelement auch Werkstoffe mit ähnlichen Eigenschaften miteinander kombiniert werden (z.B. hinsichtlich Gefügestruktur, Härte), welche ohne verbautes Zwischenelement jeweils zu erhöhtem Verschleiß neigen könnten/würden. Insofern kann die vorliegende Erfindung sowohl für Neuprodukte als auch im Zusammenhang mit Serviceanwendungen implementiert werden.

Es hat sich gezeigt, dass die vorliegende Erfindung auch die folgenden Vorteile sicherstellen kann: Im Vergleich zu bisherigen Paarungen (Achse mit Achsaufnahme) findet keine unkontrollierte Anfangs-Konditionierung des Achskontaktes statt. Dies bewirkt auch spürbar weniger Materialeintrag ins Öl und Getriebe. Insbesondere wird die Vermeidung von kaltverfestigten Partikeln erleichtert, welche die Lager oder Verzahnung schädigen könnten. Die verbesserte Einspannung reduziert speziell in einem Planetengetriebe beispielsweise auch radiale und axiale Deformationen des Planetenträgers, was wiederum die Mikrobewegung im Achskontakt reduziert und damit zur Minderung des Reibverschleißes beiträgt. Weiterhin können Strukturbauteile nun leichter gewichtsoptimiert dimensioniert werden. Durch die erreichte Steifigkeitserhöhung verbessert sich das Tragverhalten der Baugruppe, wobei insbesondere auch eine effizientere Dimensionierung der Verzahnung und Lagerung ermöglicht wird. Diese Maßnahmen stehen auch in unmittelbarem Zusammenhang mit Leistungsdichtesteigerungen. Durch die Ausrichtemöglichkeit des Zwischenelements bei der Montage lassen sich zudem auch Fertigungsabweichungen des Trägers bzw. der Achsaufnahme und der Achsen zueinander ausgleichen und optimierte Bedingungen einstellen. Im Gegensatz zu einer Ausführung mit stetig strammeren Passungen wird die Montage durch das wenigstens eine Zwischenelement insbesondere bei geschlitzter, segmentierter oder konischer Form begünstigt (kein noch höheres Aufweiten der Bohrung als aktuell bereits erforderlich). Die Spreizung kann bei der Achsmontage thermisch oder durch Einschlagen bzw. Pulsen in den Träger bzw. in die Achsaufnahme erfolgen. Die Montage kann wahlweise auch durch thermisches Fügen eines einteiligen Zwischenelementes realisiert werden.

Als axialfeste Lagerung ist dabei insbesondere eine Lagerung/Befestigung zu verstehen, bei welcher keine nennenswerten Drehmomente zu übertragen sind oder bei welcher vorrangig eine axialfeste Positionierung der Kontaktpartner von Bedeutung ist; die Achse ist in der Achsaufnahme in einer vordefinierten axialen Soll-Position angeordnet und definiert dabei z.B. eine Drehachse für ein mittels eines Planetenträgers geführten Planetenrad. Der Begriff "axialfest" kann demnach auch eine drehfeste Anordnung umfassen; gemäß der vorliegenden Offenbarung wurde der Begriff "axialfest" gewählt, da für die avisierten Anwendungen vornehmlich die Aufgabe einer Minimierung axialer Relativbewegungen zu überwinden ist. Gleichwohl können die hier im Zusammenhang mit der axialfesten Anordnung beschriebenen Vorteile auch weiter durch eine mit den erfindungsgemäßen Maßnahmen einhergehende verbesserte Drehfestigkeit ausgeprägt sein/werden.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu oder anderweitig synonym verwendete/verwendbare deutschsprachige Begriffe können hier der Vollständigkeit halber in (Klammern) angegeben werden, oder vice versa.

Bei bisherigen Getrieben ergeben sich oft Nachteile hinsichtlich Bauraumlänge oder hoher Press-/Kontaktkräfte und dadurch begründetem Mehraufwand bezüglich Material und konstruktivem Umfang des Getriebes oder auch hinsichtlich einer vergleichsweise stark eingeschränkten Auswahlmöglichkeit bezüglich verwendbarer Materialien. Hingegen gemäß der Erfindung kann auch die Erkenntnis genutzt werden, dass eine funktionale Entkopplung mittels einer zusätzlichen Zwischenelementanordnung an der Schnittstelle zwischen Achse und Achsaufnahme sichergestellt werden kann, wodurch auch die jeweilige Materialpaarung leichter für eine spezifische Funktion optimiert werden kann, ohne dabei spürbare nachteilige Nebeneffekte hervorzurufen. Wenn das jeweilige Zwischenelement materialspezifisch optimiert werden kann, insbesondere sowohl an der Innenkontaktseite zur Achse als auch an der Außenkontaktseite zur Achsaufnahme, so kann die Materialauswahl betreffend die Achse und/oder die Achsaufnahme unabhängiger von irgendwelchen Verschleißaspekten getroffen werden. Zudem kann das jeweilige Zwischenelement auch die Funktion einer sicheren/robusten und belastbaren Axialsicherung bzw. Axialfixierung übernehmen und diesbezüglich das Risiko von Relativbewegungen minimieren.

Sofern gemäß der vorliegenden Offenbarung bezüglich des Industriegetriebes auf eine Achsaufnahme Bezug genommen wird, so bezieht sich dies bei Planetenträgern insbesondere auch auf Achsbohrungen im Planetenträger. Die vorliegende Offenbarung bezieht sich jedoch unabhängig vom Getriebetyp allgemein auf Achsaufnahmen jeglicher Ausgestaltung.

Im Folgenden wird spezifischer auf einzelne Ausführungsbeispiele eingegangen; die im Folgenden jeweils beschriebenen Merkmalskombinationen sind miteinander kombinierbar, sofern dies hier nicht explizit negiert ist.

Gemäß einem Ausführungsbeispiel weist die Zwischenelementanordnung wenigstens ein Zwischenelement auf, welches axialfest zwischen Achse und Achsaufnahme im (entsprechenden) Axialabschnitt gelagert ist, und welches in zumindest einem äußeren Oberflächenabschnitt, also seitens der Achsaufnahme, eine (bei entsprechender Normalkraft auch in axialer Richtung belastbare) formschlüssig wirkende strukturierte Oberfläche aufweist, welche bevorzugt eine größere Härte aufweist als die korrespondierende Oberfläche der Achsaufnahme, und in zumindest einem inneren Oberflächenabschnitt, also seitens der Achse, eine kraftschlüssig wirkende strukturierte Oberfläche aufweist. Diese Differenzierung hinsichtlich der Art und Weise der kraft- und/oder formschlüssigen Interaktion auf der jeweiligen Kontaktseite ermöglicht auch eine funktionelle Fokussierung an der jeweiligen Kontaktfläche, so dass die damit einher gehenden technischen Effekt jeweils an der dafür besonders vorteilhaften Schnittstelle generiert werden können. Auch kann dadurch das Spektrum der vorteilhaften Montageoptionen möglichst breit gehalten werden; beispielsweise können kraftschlüssige Verbindungen an ebenen Flächenabschnitten (bzw. zylindrischen Flächen) auch eine Pressung bzw. Presspassung auf vergleichsweise einfache Art und Weise realisieren, auch bei vergleichsweise geringem Montageaufwand. Bevorzugt ist die jeweilige außenliegende strukturierte Oberfläche des jeweiligen Zwischenelements also eine für Formschluss optimierte Oberfläche, bei welcher die Axialhemmung auch unabhängig von einer Normalkraft sichergestellt ist/wäre. Bevorzugt ist die jeweilige innenliegende strukturierte Oberfläche also eine für Kraftschluss optimierte Oberfläche, bei welcher die Axialhemmung in Abhängigkeit von einer Normalkraft bzw. vom Betrag dieser Normalkraft generiert werden kann. Anders ausgedrückt: Die beiden Mantelflächen des jeweiligen Zwischenelements sind andersartig strukturiert (insbesondere außen gröber und innen feiner). Gemäß einer Abwandlung von diesem Konzept können sowohl die außenliegende als auch die innenliegende strukturierte Oberfläche beide jeweils eine vergleichsweise grobe Struktur aufweisen und dabei zusätzlich auch mit einer vergleichsweise feinen Struktur versehen sein (wie im Folgenden unter Bezugnahme auf eine Ausgestaltung in der Art eines Achsdübels/-ankers bzw. einer Zwischenachstülle beispielhaft näher erläutert), in der Art einer funktionalen Redundanz dank sowohl grober als auch feiner Strukturen auf beiden Seiten/Mantelflächen.

Als "formschlüssig" ist hier eine axialfeste Fixierung im Wesentlichen beruhend auf geometrischen Gegebenheiten der jeweiligen Oberfläche zu verstehen, wobei diese Wirkungsweise hier insbesondere auch durch Bezugnahme auf relativ gröbere Strukturen hervorgehoben wird; bildlich gesprochen wird dabei insbesondere auch auf ein Sägezahnprofil oder ein Feingewinde Bezug genommen. Dabei kann der Formschluss bevorzugt bereits dadurch sichergestellt werden, dass die entsprechende Formgebung/Geometrie am Zwischenelement ausgeprägt ist, also nicht notwendigerweise auch an der Achsaufhahme. Ein Verankern durch Formgebung kann dann auch dank unterschiedlicher Materialhärten und dank vergleichsweise hoher Flächenpressung realisiert werden, indem sich die Außenmantelfläche des Zwischenelements in die korrespondierende Innenmantelfläche der Achsaufnahme eingräbt bzw. eindrückt.

Als "kraftschlüssig" und im engeren Sinne "reibschlüssig" bzw. "haftreibschlüssig" (unter Bezugnahme auf Verbindungen ohne zulässige Relativbewegung) ist hier insbesondere eine feste Verbindung ohne das Erfordernis von spezifischer Formgebung oder geometrischen Unebenheiten wie z.B. Kanten oder Absätzen oder spürbaren Rillen oder Sägezahnprofilen zu verstehen, wobei diese Wirkungsweise hier insbesondere auch durch Bezugnahme auf relativ feine/feinere Strukturen hervorgehoben wird, insbesondere durch Bezugnahme auf Laserstrukturen bzw. laserstrukturierte Oberflächen, die auch (oder gerade eben) auf vollständig planen/ebenen Oberflächen (insbesondere zylindrischen Innenmantelflächen) realisiert werden können, auf welche also keine Absätze oder Kanten in geometrischem Sinne vorliegen müssen, sondern welche eine Haftung/Fixierung gemäß einer durch die Strukturierung definierten Haftreibungszahl sicherstellen können. Der Kraftschluss kann dabei in Abhängigkeit von einer bestimmten auf die Kontaktflächen wirkenden Normalkraft sichergestellt werden (wohingegen bei Formschluss eine solche Normalkraft nicht notwendigerweise erforderlich ist/wäre). Die vorliegende Erfindung basiert demnach auch auf dem Konzept, unterschiedliche Wirkungsweisen einer axialfesten Fixierung an den dafür jeweils besonders bevorzugten Kontaktpartnern zu realisieren. Als "formschlüssig" bzw. als "im Wesentlichen durch Formschluss" ist dabei eine Verbindung zu verstehen, welche im Wesentlichen auf Formschluss im Sinne einer mechanischen Verzahnung basiert und wahlweise auch Kraftschluss umfassen kann (wobei sich ein zumindest leicht anteiliger Kraftschluss bereits durch unterschiedliche Verformungen und Spannungen an den Kontaktflächen ergeben kann, also nicht gänzlich ausgeschlossen werden kann/soll). Als "kraftschlüssig" bzw. als "im Wesentlichen durch Kraftschluss" ist analog eine Verbindung zu verstehen, welche im Wesentlichen auf Kraftschluss basiert und wahlweise auch Formschluss umfassen kann bzw. durch eine formschlüssige Wirkungsweise zumindest zu einem kleinen Anteil ergänzt sein kann (beispielsweise wenn das Zwischenelement auch einen Absatz oder eine Anlauffläche bzw. -scheibe oder dergleichen Kontur aufweist). Daraus ist ersichtlich, dass ein Zusammenwirken dieser beiden Wirkungsweisen in der Praxis nicht per se ausgeschlossen werden kann und gemäß Ausführungsbeispielen der vorliegenden Erfindung je nach Ausgestaltung einzelner Zwischenelemente auch simultan realisiert sein mag. Die vorliegende Offenbarung ist demnach auch so zu verstehen, dass bei Bezugnahme auf "Kraftschluss" die entsprechende Oberfläche für eine im Wesentlichen kraftschlüssige Verbindung vorgesehen bzw. ausgelegt bzw. konfiguriert ist (hier: insbesondere wenigstens eine zur Achse weisende Innenfläche des jeweiligen Zwischenelements), und dass bei Bezugnahme auf "Formschluss" die entsprechende Oberfläche für eine im Wesentlichen formschlüssige Verbindung ausgelegt bzw. konfiguriert ist (hier: insbesondere wenigstens eine zur Achsaufnahme weisende Außenfläche des jeweiligen Zwischenelements). Diese Differenzierung bietet z.B. auch im Zusammenhang mit unterschiedlichen Härten oder unterschiedlichen Lagen unterschiedlicher Werkstoffe den Vorteil einer großen Variabilität und Individualisierbarkeit und damit großes Optimierungspotential für ein jeweiliges Getriebe. Durch die folgenden beispielhaften Ausführungsbeispiele wird diese funktionelle Unterscheidung noch weiter erläutert und spezifisch veranschaulicht.

Dabei basiert die Erfindung auch auf dem Konzept, das wenigstens eine Zwischenelement an wenigstens einer Seite (insbesondere an der außenliegenden Oberfläche) härter auszugestalten als die Achsaufhahme; auf diese Weise kann die Achsaufnahme mit vorteilhaften Materialeigenschaften weitgehend unabhängig von Verschleißschutzanforderungen konzipiert werden, und die Funktion des Verschleißschutzes kann mittels der Zwischenelementanordnung sichergestellt werden. Dank der Zwischenelementanordnung ist demnach eine Materialbearbeitung an der Achsaufnahme und/oder der Achse nicht oder nur in stark reduziertem Umfang erforderlich. Vorteilhaft kann die Zwischenelementanordnung derart bereitgestellt werden, dass eine Materialauswahl und etwaige Nachbearbeitung an Achse und Achsaufnahme möglichst variantenreich und flexibel hinsichtlich anderer Anforderungen als Verschleißschutz vorgenommen werden kann. Optional können z.B. die Achsenden bearbeitet sein/werden. Erfindungsgemäß ist dies jedoch nicht notwendigerweise erforderlich. Optional kann die Achse außen für einen kraftschlüssigen Presssitz optimiert strukturiert sein und dabei auch vergleichsweise hart (insbesondere martensitisch hart) ausgeführt sein, insbesondere durch Laserstrukturierung.

Gemäß einem Ausführungsbeispiel liegt die Zwischenelementanordnung in einer der folgenden Ausgestaltungen vor oder umfasst wenigstens ein Zwischenelement in einer der folgenden Ausgestaltungen: geschlitzte Hülse, integriertes Anlaufflächenelement, L-Buchse mit Innenmutter, L-Buchse in Kombination mit Konus, Zwischenachstülle insbesondere konisch, ballig, gerändelt, mit einer Verzahnung versehen, schrauben- oder wellenförmig geformt. Diese im Folgenden noch detaillierter beschriebenen Varianten liefern jeweils auch eine besonders vorteilhafte Anordnung in bestimmten Anwendungen, beispielsweise jeweils betreffend eine Lagerung von Planetenachsen in einem Planetenträger eines Planetengetriebes.

Ein Anlaufflächenelement erleichtert dabei eine relative axiale Positionierung z.B. eines Planetenrades, beispielsweise indem entsprechende Segmente oder Auflagepunkte vorgesehen werden. Im Gegensatz dazu ist eine separate Anlaufscheibe als eher kostenaufwändige Lösung anzusehen, bei welcher eine zusätzliche Sicherung erforderlich wäre. Das erfindungsgemäße Konzept ermöglicht nun auf vergleichsweise einfache und robuste Weise eine Integration dieser optionalen Funktionalität.

Bevorzugt ist auch die Achse selbst mit einer korrespondierenden Oberflächenstruktur versehen, insbesondere ebenfalls mit einer vergleichsweise feinen Oberflächenstruktur korrespondierend zur innenliegenden Oberfläche des jeweiligen Zwischenelements. Besonders vorteilhaft ist dabei auch ein möglichst harter Werkstoff der Achse, z.B. martensitische Härte. Hierdurch lässt sich an der Innenseite der Zwischenelementanordnung ein sehr gut haftender kraftschlüssiger Presssitz realisieren. Der Fachmann kann für ein jeweiliges Anwendungsbeispiel vorgeben, ob auch eine jeweilige Achse strukturiert vorliegen soll, oder ob nur das Zwischenelement strukturiert vorliegen soll.

Gemäß einem Ausführungsbeispiel weist die Zwischenelementanordnung wenigstens ein Zwischenelement eingerichtet zur axialen Positionierung eines Planetenrades des Industriegetriebes auf, insbesondere mittels integrierter Anlauffläche. Diese Funktionalität kann z.B. durch ein integriertes Anlaufflächenelement sichergestellt werden und klassische (separate) Anlaufscheiben ersetzen bzw. entbehrlich machen.

Gemäß einem Ausführungsbeispiel ist die Zwischenelementanordnung als geschlitzte Hülse ausgestaltet oder umfasst wenigstens ein Zwischenelement in dieser Ausgestaltung, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder (Fein-)Gewindes versehen ist oder gerändelt ausgestaltet ist. Diese Ausgestaltung zeichnet sich nicht zuletzt auch durch eine vorteilhaft simple Grundform aus und ist für viele unterschiedliche Typen von Achse und Achsaufnahme-Paarungen verwendbar. Dabei kann die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen sein. Dies ermöglicht auch innenseitig eine sehr zuverlässige axialfeste Kontaktierung. Bei dieser Ausgestaltung kann es vorteilhaft sein, wenn die Achse außen für einen kraftschlüssigen Presssitz optimiert strukturiert und dabei auch vergleichsweise hart (insbesondere martensitisch hart) ausgeführt, insbesondere durch Laserstrukturierung, insbesondere korrespondierend zu einer/der innenliegenden Oberflächenstrukturierung des Zwischenelements.

Gemäß einem Ausführungsbeispiel ist die Zwischenelementanordnung als Hülse mit integrierter Anlauffläche bzw. -kontur ausgestaltet (Anlaufflächenelement oder -kontur) oder umfasst wenigstens ein Zwischenelement in dieser Ausgestaltung, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder Gewindes oder gerändelt versehen ist, wobei die Anlauffläche bzw. -kontur bevorzugt stirnseitig gleitlagerbeschichtet ist oder einen gleitlagerbeschichteten Kragen aufweist. Diese Ausgestaltung begünstigt nicht zuletzt auch eine Integration an einer Schnittstelle zwischen Planetenträger und Planetenachsen und kann die Reibung bzw. den Verschleiß auch an wenigstens einer Stirnseite vorteilhaft minimieren. Dabei kann die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen sein. Dies ermöglicht auch innenseitig eine sehr zuverlässige axialfeste Anhaftung gegen axiale Relativbewegungen, ohne dass dafür die entsprechende Mantelfläche mit einer zusätzlichen (in makroskopischer Hinsicht) geometrischen Formgebung versehen sein muss. Dies hat nicht zuletzt auch Vorteile hinsichtlich möglichst umfangreicher Montage-/Zusammenbaumöglichkeiten.

Gemäß einem Ausführungsbeispiel ist die Zwischenelementanordnung als L-Buchse ausgestaltet oder umfasst wenigstens ein Zwischenelement in dieser Ausgestaltung, ist insbesondere als L-Buchse mit Innenmutter ausgestaltet oder umfasst eine L-Buchse in Kombination mit einem Konus, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder Gewindes oder gerändelt versehen ist, wobei die L-Buchse bevorzugt stirnseitig gleitlagerbeschichtet ist, wobei die L-Buchse mittels einer/der Innenmutter und/oder mittels eines/des Konus an der Achse in axialer Richtung gesichert ist. Hierdurch können nicht zuletzt auch weitere Vorteile betreffend die Einbausituation erzielt werden; beispielsweise kann insbesondere bei Planetengetrieben ein Sicherungsring entfallen. Dabei kann die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen sein. Dies ermöglicht auch innenseitig eine sehr zuverlässige axialfeste Anhaftung gegen axiale Relativbewegungen. Dabei kann ein/der in Kombination mit der L-Buchse bereitgestellte Konus in Ausgestaltung als konischer Achssitz bereitgestellt sein, insbesondere am gegenüberliegenden Achsende einer an zwei Axialabschnitten eingefassten Achse. Eine derartige Ausgestaltung liefert auch den Vorteil einer sehr effektiven Axiallastübertragung (insbesondere im Sinne einer Entlastung der weiteren sich kontaktierenden Mantelflächen) an einem der Achsenden, insbesondere in Verbindung mit einer vergleichsweise einfachen/vorteilhaften Montage.

Gemäß einem Ausführungsbeispiel ist die Zwischenelementanordnung als insbesondere konisch geformte Zwischenachstülle ausgestaltet oder umfasst wenigstens ein Zwischenelement in dieser Ausgestaltung, wobei die strukturierte Oberfläche zur formschlüssigen Abstützung in axialer Richtung sowohl auf einer/der Innenseite als auch auf einer/der Außenseite der Zwischenachstülle vorgesehen ist und mit einer formschlüssig wirkenden Oberflächenstruktur insbesondere in der Art einer beidseitigen mehrfach konischen Sägezahnprofilierung für eine schraubenartige Verzahnung versehen ist, und wobei bevorzugt auch sowohl innen als auch außen eine relativ feinere Struktur umfassend eine kraftschlüssig wirkenden Oberflächenstruktur mit erhöhtem Haftreibkoeffizient insbesondere durch Laserstrukturierung oder Nanostrukturierung oder chemische Strukturierung vorgesehen ist (insbesondere sowohl innen als auch außen, zwecks funktionaler Redundanz an beiden Kontaktflächen innen und außen). Dies ermöglicht nicht zuletzt auch eine vorteilhafte Kombinierung von kraft- und formschlüssigen Hafteffekten sowohl innen- als auch außenseitig. Dabei kann ein/das als konisch geformte Zwischenachstülle ausgestaltete Zwischenelement der Zwischenelementanordnung eine ballige Kammprofilierung aufweisen. Hierdurch kann nicht zuletzt auch ein Verformungs- bzw. Toleranzausgleich integriert werden und auch die Montage erleichtert werden.

Gemäß einem Ausführungsbeispiel ist die Zwischenelementanordnung oder ein einzelnes Zwischenelement davon aus mehreren Lagen ausgebildet, insbesondere aus mehreren Lagen mit jeweils unterschiedlicher/individueller (lokaler) Härte (beispielsweise hervorgerufen durch unterschiedliche lokale Härteprozesse) oder aus unterschiedlichen Werkstoffen oder Werkstoffpaarungen mit jeweils unterschiedlicher/individueller Härte insbesondere auch ungleich der Härte des Werkstoffs der Achse oder der Achsaufhahme. Dies liefert auch weitere Variationsmöglichkeiten hinsichtlich Material- und Härtepaarungen an den Kontaktflächen und daher eine noch größere Individualisierbarkeit. Beispielsweise können Mikrobewegung mittels eines vergleichsweise weichen Kerns des Zwischenelementes auf effektive Weise abgebaut werden, also indem außen (in wenigstens einer äußeren Lage) eine vergleichsweise härtere, verschleißfestere Struktur vorgesehen wird. Der Fachmann kann z.B. auch in Hinblick auf vorteilhafte Materialien von Achse und Achsaufnahme entscheiden, ob mehrere Lagen bzw. mehrere Werkstoffe (Werkstoffschichten) vorteilhaft vorzusehen sind und welche spezifische Härte jeweils vorzusehen ist. Diesbezügliche Variationen sind auch stark anwendungsspezifisch zu implementieren.

Gemäß einem Ausführungsbeispiel ist innerhalb wenigstens eines Oberflächenabschnitts des (jeweiligen) Zwischenelements eine Liniendichte und/oder Richtung der Struktur und/oder Intensität und Form der Struktur individualisiert ist. Dies ermöglicht nicht zuletzt auch eine noch spezifischere Auslegung hinsichtlich lokaler Kontaktbedingungen z.B. hinsichtlich Flächenpressung, Kraftwirkungsrichtung oder dergleichen.

Gemäß einem Ausführungsbeispiel ist das Industriegetriebe als Planetengetriebe ausgestaltet, wobei eine/die (jeweilige) Achsaufnahme in einem Planetenträger des Planetengetriebes vorgesehen ist, insbesondere in Ausgestaltung als Planetenträgerbohrung, und wobei wenigstens ein Zwischenelement der Zwischenelementanordnung formschlüssig gegen axiale Relativbewegung zwischen Planetenträger bzw. Achsaufnahme und Achse angeordnet ist bzw. dort verschleißmindernd wirkt. Die vorliegende Erfindung kann nicht zuletzt auch auf besonders vorteilhafte Weise in Planetengetrieben realisiert werden. Der Planetenträger ist dabei beispielsweise als Gussteil ausgestaltet; das Gussmaterial kann dabei weitgehend unabhängig vom wenigstens einen Material des wenigstens einen Zwischenelements gewählt werden.

Gemäß einem Ausführungsbeispiel ist das Industriegetriebe in einem Triebstrang einer Windenergieanlage verbaut oder speziell dafür konfiguriert, insbesondere in Ausgestaltung als Planetengetriebe oder umfassend wenigstens eine Planetengetriebestufe. Diese Anwendung in einem vergleichsweise hochbelasteten und dynamischen Triebstrang liefert dabei auf besonders spürbare und nachhaltige Weise insbesondere die hier beschriebenen vorteilhafte verschließmindernden Effekte.

Gemäß einem Ausführungsbeispiel ist die jeweilige Achse in zwei Axialabschnitten in der Achsaufnahme axialfest gelagert, wobei die jeweilige Achse in einem ersten Axialabschnitt mittels eines ersten Zwischenelements der Zwischenelementanordnung axialfest gelagert ist und in einem zweiten Axialabschnitt mittels eines zweiten Zwischenelements der Zwischenelementanordnung axialfest gelagert ist, wobei die Zwischenelemente an wenigstens einer innenliegenden Oberfläche jeweils zumindest oder im Wesentlichen kraftschlüssig an der Achse anliegen und an wenigstens einer außenliegenden Oberfläche jeweils zumindest oder im Wesentlichen formschlüssig an der Achse anliegen; wobei das erste und zweite Zwischenelement wahlweise von demselben Typ oder unterschiedlichen Typs sind, insbesondere ausgewählt aus der folgenden Gruppe von Zwischenelementtypen: Hülse wahlweise mit Anlauffläche, L-Buchse wahlweise in Kombination mit Innenmutter und/oder Konus. Diese Variabilität hat sich insbesondere auch im Zusammenhang mit unterschiedlichen Arten von Planetengetrieben und einer axialfesten Lagerung der einzelnen Planetenachsen als vorteilhaft erwiesen.

Ein Aspekt betrifft ferner ein Herstellungsverfahren für verschleißmindernde Zwischenelemente für Industriegetriebe mit verschleißminimierten Komponenten umfassend die zuvor weiter oben beschriebene Zwischenelementanordnung, beispielsweise in einer Anordnung in einem Triebstrang einer Windenergieanlage. Die zuvor genannte Aufgabe wird insofern auch gelöst durch ein Verfahren gemäß dem entsprechenden nebengeordneten Verfahrensanspruch, nämlich durch ein Verfahren zum Herstellen einer verschleißmindernden Zwischenelementanordnung zur Verwendung in einem Industriegetriebe in wenigstens einem Axialabschnitt zwischen wenigstens einer Achse und wenigstens einer Achsaufnahme zur axialfesten Lagerung der Achse in der Achsaufnahme, insbesondere zur Verwendung an einem Planetenträger eines Planetengetriebes, wobei in zumindest einem Oberflächenabschnitt wenigstens eines Zwischenelements der Zwischenelementanordnung seitens der Achse und/oder seitens der Achsaufnahme eine strukturierte Oberfläche eingebracht wird, die eingerichtet ist zur form- und/oder kraftschlüssigen Abstützung gegen axiale Verlagerung, insbesondere zumindest umfassend ein Laserstrukturieren einer für Kraftschluss eingerichteten Innenoberfläche. Hierdurch ergeben sich zuvor genannte Vorteile, insbesondere in Hinblick auf minimierten Kosten-/Fertigungsaufwand sowie größere Variationsmöglichkeiten auch für andere Getriebekomponenten, insbesondere für Achse und Achsaufnahme.

Gemäß einer Ausführungsform wird in zumindest einem Oberflächenabschnitt einer innenliegenden Oberfläche/Mantelfläche des wenigstens einen Zwischenelements eine im Wesentlichen kraftschlüssig wirkende Oberfläche durch wenigstens einen der folgenden Schritte eingebracht: Laserstrukturieren, Nanostrukturieren, chemische Strukturierung. Dies ermöglicht auch eine optimierte Verbindung nicht nur an der Außenmantelfläche sondern auch an der Innenmantelfläche, bei einer anderen Priorisierung der Art des Hafteffektes, nämlich Kraftschluss bzw. Haftreibung. Dabei wird die strukturierte Oberfläche bevorzugt in Abhängigkeit von wenigstens einem vordefinierten/vordefinierbaren spezifischen Erhabenheits- und/oder Dichteparameter generiert, insbesondere in wellen- oder schlangenlinienförmiger bzw. mäanderförmiger Struktur oder in schuppenartiger Struktur insbesondere mit mikroskopischen Hinterschnitten und ohne vordefinierte räumliche Ausrichtung, also bei weitgehend aleatorischer Ausrichtung. Dies erweitert nicht zuletzt die Möglichkeiten einer Individualisierung und erleichtert auch eine Art Standardisierung beim Einbringen ganz bestimmter Oberflächenstrukturen bzw. Rauhigkeitscharakteristika.

Dabei ermöglicht insbesondere das Laserstrukturieren eine sehr spezifische Auslegung/Ausgestaltung zumindest der inneren Mantelfläche des Zwischenelements, insbesondere basierend auf Parametervariationen betreffend eine bestimmte Haftreibungszahl, z.B. hinsichtlich der Tiefe/Höhe und Anordnungsdichte der Struktur und hinsichtlich der Profilform des gelaserten Rauheitsprofils, und auch von der Normalkraft, also von einer tatsächlichen Einbausituation. Es hat sich gezeigt, dass das Laserstrukturieren insbesondere auch für die Schnittstelle zwischen Planetenachsen und Planetenträgern von großem Nutzen ist, nicht zuletzt dank hoher Güte und Prozesssicherheit und Reproduzierbarkeit, so dass die Art und Weise der Lagerung der einzelnen Planeten nicht voneinander abweichend realisiert wird, sondern eine identische Ausgestaltung und identische Betriebsbedingungen für alle Planeten und Trägerbohrungen sichergestellt werden kann. Speziell das Laserstrukturieren ermöglicht sehr exakt definierbare Dimensionen und Relativpositionen der einzelnen Struktursegmente und kann dabei auch auf vergleichsweise einfache Art und Weise für eine größere Stückzahl automatisiert und in weitere Herstellungsprozesse integriert werden.

Gemäß einer Ausführungsform wird in zumindest einem Oberflächenabschnitt einer außenliegenden Oberfläche/Mantelfläche des wenigstens einen Zwischenelements eine im Wesentlichen formschlüssig wirkende Oberfläche durch wenigstens einen der folgenden Schritte eingebracht: Sägezahnprofilierung, Feingewindeschneiden. Dies begünstigt nicht zuletzt auch eine sehr zuverlässige Verbindung zwischen einem vergleichsweise harten Zwischenelement und einer vergleichsweise weichen Achsaufnahme, beispielsweise einem als Gussteil ausgestalteten Planetenträger.

Beim Einbringen wenigstens eines Zwischenelements der Zwischenelementanordnung zwischen Achse und Achsaufnahme kann die entsprechende Bauteilpaarung gespreizt werden. Hierdurch ergeben sich insbesondere im Vergleich zu klassischen vergleichsweise strammen Passungen weitere Vorteile nicht nur hinsichtlich Montage sondern auch hinsichtlich Verformungsverhalten.

Die zuvor genannte Aufgabe wird auch gelöst durch eine verschleißmindernde Zwischenelementanordnung für ein Industriegetriebe aufweisend wenigstens eine Achse und wenigstens eine Achsaufnahme zur Lagerung der Achse, wobei die Zwischenelementanordnung zur Anordnung zwischen Achsaufnahme und Achse eingerichtet ist, wobei wenigstens ein verschleißminderndes Zwischenelement der Zwischenelementanordnung hergestellt ist durch wenigstens einen der folgenden Schritte: Bereitstellen einer Grundform eines bevorzugt einstückigen Grundkörpers eines separaten Zwischenelements eingerichtet zur verschleißmindernden Anordnung zwischen Achse und Achsaufnahme, Einbringen wenigstens einer zur form- und wahlweise auch kraftschlüssigen Abstützung gegen axiale Relativbewegung eingerichteten strukturierten Oberfläche in zumindest einem Oberflächenabschnitt wenigstens eines Zwischenelements der Zwischenelementanordnung durch Laserstrukturieren oder Nanostrukturieren oder chemische Strukturierung, insbesondere zumindest innenliegend seitens der Achse, und wahlweise auch Einbringen wenigstens einer für formschlüssige Abstützung gegen axiale Relativbewegung eingerichteten strukturierten Oberfläche in zumindest einem Oberflächenabschnitt wenigstens eines Zwischenelements der Zwischenelementanordnung durch Sägezahnprofilierung oder Feingewindeschneiden, insbesondere zumindest außenliegend seitens der Achsaufnahme; insbesondere hergestellt durch ein hier zuvor weiter oben oder im Zusammenhang mit den Figuren beschriebenes Verfahren. Hierdurch lassen sich zuvor genannte Vorteile realisieren, insbesondere auch in Hinblick auf unabhängige Fertigungs- und Logistikketten und die schon zuvor mehrfach erwähnte hohe bauteilspezifische Individualisierbarkeit.

Die zuvor genannte Aufgabe wird auch gelöst durch Verwendung einer verschleißmindernden Zwischenelementanordnung in einem Industriegetriebe zwischen einer Achse und einer Achsaufnahme zur Lagerung der Achse, insbesondere in einem Planetengetriebe, wobei die Zwischenelementanordnung mit wenigstens einer für Formschluss eingerichteten Außenmantelfläche, die in wenigstens einem Außenmantelflächenabschnitt eine Formschlusskontur aufweist, formschlüssig in der Achsaufnahme zur Anlage kommt, wobei die Zwischenelementanordnung mit wenigstens einer für Kraftschluss eingerichteten Innenmantelfläche, die in wenigstens einem Innenmantelflächenabschnitt eine kraftschlüssig wirkende Struktur aufweist, kraft-/reibschlüssig auf der Achse zur Anlage kommt, insbesondere mit der Zwischenelementanordnung umfassend wenigstens ein Zwischenelement in Ausgestaltung als Hülse oder L-Buchse jeweils mit Anlauffläche, insbesondere für bereits bestehende und verbaute Getriebe/-komponenten, insbesondere in wenigstens einer Planetengetriebestufe eines Triebstrangs einer Windenergieanlage, insbesondere durch entsprechende Verwendung einer zuvor weiter oben beschriebenen Zwischenelementanordnung. Hierdurch lassen sich zuvor genannte Vorteile realisieren, insbesondere auch in Hinblick auf eine effiziente/effektive funktionale Aufgliederung von axialsicherungstechnischen Vorgaben auf einzelne Kontaktflächen bzw. separate Bauteile.

Die zuvor genannte Aufgabe wird auch gelöst durch Verwendung wenigstens eines Zwischenelements einer verschleißmindernden Zwischenelementanordnung in einem Industriegetriebe zwischen einer Achse und einer Achsaufnahme zur Lagerung der Achse, insbesondere jeweils in ein oder zwei Axialabschnitten zwischen Planetenachsen und einem Planetenträger eines Planetengetriebes, wobei das wenigstens eine Zwischenelement mit wenigstens einer für Formschluss eingerichteten Außenmantelfläche, die in wenigstens einem Außenmantelflächenabschnitt eine insbesondere sägezahn- oder feingewindeartige Formschlusskontur aufweist und eine relativ größere Härte aufweist als die Achsaufnahme, formschlüssig in der Achsaufnahme sitzt, wobei das wenigstens eine Zwischenelement mit wenigstens einer für Kraftschluss eingerichteten Innenmantelfläche, die in wenigstens einem Innenmantelflächenabschnitt eine kraftschlüssig wirkende Struktur, insbesondere laserstrukturierte Struktur, aufweist, kraft-/reibschlüssig auf der Achse sitzt, wobei das wenigstens eine Zwischenelement bevorzugt thermisch und/oder durch Einschlagen in die Achsaufnahme montiert ist/wird, insbesondere mit dem wenigstens einen Zwischenelement in Ausgestaltung als Hülse oder L-Buchse oder Zwischenachstülle jeweils mit Anlauffläche, insbesondere in wenigstens einer Planetengetriebestufe eines Triebstrangs einer Windenergieanlage, insbesondere durch entsprechende Verwendung einer zuvor weiter oben beschriebenen Zwischenelementanordnung. Hierdurch lassen sich zuvor genannte Vorteile realisieren, insbesondere in Hinblick auf zahlreiche Vorteile nicht nur in konstruktiver und verschleißtechnischer Hinsicht sondern auch im Gesamtkontext einer Montage der Komponenten eines Industriegetriebes.

Zusammenfassung: Die vorliegende Erfindung betrifft ein Industriegetriebe aufweisend wenigstens eine Achse und wenigstens eine Achsaufnahme zur axialfesten Lagerung der Achse, wobei die Achse in wenigstens einem Axialabschnitt in der Achsaufnahme axialfest gelagert ist; wobei zwischen Achsaufnahme und Achse wirkend im/in dem wenigstens einen Axialabschnitt eine verschleißmindernde Zwischenelementanordnung vorgesehen ist, welche axialfest zwischen Achse und Achsaufnahme gelagert ist, und welche in zumindest einem Oberflächenabschnitt seitens der Achse und/oder seitens der Achsaufnahme eine strukturierte Oberfläche aufweist und dadurch eingerichtet ist zur form- und/oder kraftschlüssigen Abstützung gegen axiale Verlagerung. Die vorliegende Erfindung betrifft ferner auch entsprechende verschleißmindernde Zwischenelemente mit strukturierten Oberflächen für eine solche Zwischenelementanordnung sowie Herstellungsverfahren dafür und deren Verwendung insbesondere in Planetengetrieben.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen jeweils in schematischer Darstellung:
**Figur 1** in einer geschnittenen Seitenansicht Komponenten eines Industriegetriebes mit einer verschleißmindernden Zwischenelementanordnung gemäß Ausführungsbeispielen;
**Figuren 2A** bis **2F** Ansichten von Komponenten eines Industriegetriebes bzw. einer darin verwendeten verschleißmindernden Zwischenelementanordnung gemäß einem Ausführungsbeispiel;
**Figuren 3A** bis **3C** Ansichten von Komponenten eines Industriegetriebes bzw. einer darin verwendeten verschleißmindernden Zwischenelementanordnung gemäß einem weiteren Ausführungsbeispiel;
**Figuren 4** und **5** jeweils in geschnittener Seitenansicht Komponenten eines Industriegetriebes mit verschleißmindernder Zwischenelementanordnung gemäß weiteren Ausführungsbeispielen;
**Figuren 6A, 6B** Ansichten von Komponenten eines Industriegetriebes bzw. einer darin verwendeten verschleißmindernden Zwischenelementanordnung gemäß einem weiteren Ausführungsbeispiel;
**Figuren 7A** bis **7E** eine perspektivische Ansicht und drei Seitenansichten jeweils von Komponenten eines Industriegetriebes bzw. einer darin realisierten verschleißmindernden Zwischenelementanordnung gemäß einem weiteren Ausführungsbeispiel;
**Figur 8** einzelne Schritte eines Verfahrens zum Herstellen einer Zwischenelementanordnung gemäß Ausführungsbeispielen;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Zwischenelementanordnung 10 umfassend wenigstens ein Zwischenelement 10a mit strukturierten Oberflächen 10.1, nämlich wenigstens einem radial außenliegenden Oberflächenabschnitt 10.1a (insbesondere eine strukturierte Außenmantelfläche) und wenigstens einem in radialer Richtung (r) innenliegenden Oberflächenabschnitt 10.1b (insbesondere eine strukturierte Innenmantelfläche), wobei die strukturierten Oberflächen 10.1 formschlüssige Abschnitte 10.3a (wenigstens einen) und kraftschlüssige Abschnitte 10.3b (wenigstens einen) umfassen.

Die strukturierten Oberflächen 10.1 können in einer zwischen einer Achse 101 und einer Achsaufnahme 103 verbauten Anordnung des (jeweiligen) Zwischenelements 10a eine in axialer Richtung (x) axialfeste form-/kraftschlüssige Verbindung 20 zwischen Achse und Achsaufnahme sicherstellen, beispielsweise in einem Industriegetriebe 100 umfassend wenigstens eine Planetengetriebestufe, insbesondere in einer Anordnung zwischen entsprechenden Planetenachsen und Planetenträgerbohrungen. Auch insofern kann auf vergleichsweise einfache Art und Weise ein sehr effektiver Verschleißschutz insbesondere auch an der Schnittstelle zwischen einem Planetenträger 105 und den damit in einem Planetenhohlrad 109 umlaufend geführten Planetenrädern 107 bereitgestellt werden, wobei dieser Verschleißschutz auch vergleichsweise einfach und variabel für spezifische Anwendungsbereiche individualisierbar bleibt.

Es hat sich gezeigt, dass eine besonders vorteilhafte Ausgestaltung der Zwischenelementanordnung dadurch erzielt werden kann, dass das jeweilige Zwischenelement in zumindest einem äußeren Oberflächenabschnitt (insbesondere an einer Außenmantelfläche), also seitens der Achsaufnahme, eine formschlüssig wirkende strukturierte Oberfläche mit vergleichsweise grober Formgebung/Struktur aufweist (insbesondere Sägezahnprofil gegen axiales Herauswandern, oder eine Art Feingewindekontur), welche bevorzugt eine größere Härte aufweist als die korrespondierende Oberfläche der Achsaufnahme, und in zumindest einem inneren Oberflächenabschnitt (insbesondere an einer Innenmantelfläche), also seitens der Achse, eine kraftschlüssig wirkende strukturierte Oberfläche mit vergleichsweise feiner Struktur aufweist (insbesondere laserstrukturiert, nanostrukturiert, chemisch strukturiert). Dabei kann das jeweilige Zwischenelement insbesondere in einer der folgenden (bei mehreren Axialabschnitten X1, X2 der zu lagernden Achse miteinander kombinierbaren) Ausgestaltungen bereitgestellt sein: geschlitzte Hülse, integriertes Anlaufflächenelement, L-Buchse mit Innenmutter, L-Buchse in Kombination mit Konus, Zwischenachstülle insbesondere konisch geformt.

Beispielsweise wird das Zwischenelement 10a in Ausgestaltung als Hülse 11 bereitgestellt, insbesondere als geschlitzte Hülse umfassend wenigstens einen Schlitz 11.1. Wahlweise kann an der Hülse auch eine Anlauffläche bzw. -scheibe 12 vorgesehen sein, insbesondere in Ausgestaltung als Anlaufflächenelement mit wenigstens einer gleitlagerbeschichteten Oberfläche bzw. Stirnseite 12.1 und/oder mit Radialschlitzen oder dergleichen Ausnehmungen 12.3.

Beispielsweise wird das Zwischenelement 10a in Ausgestaltung als L-Buchse 13 bereitgestellt, insbesondere mit Innen(nut)mutter 14.1 und/oder in Kombination mit einem Konus 14.3 (konischer Achssitz insbesondere bei zwei Axialabschnitten X1, X2 jeweils versehen mit einem Zwischenelement). Bevorzugt weist die L-Buchse wenigstens eine gleitlagerbeschichtete Oberfläche 13.1 bzw. Stirnseite auf.

Beispielsweise wird das Zwischenelement 10a in Ausgestaltung in der Art einer Zwischenachstülle 15 (insbesondere konisch geformt) bereitgestellt, bzw. als Achsdübel oder Achsanker, wobei die strukturierten Oberflächen sowohl auf einer/der Innenseite als auch auf einer/der Außenseite vorgesehen sind und mit einer formschlüssig wirkenden Oberflächenstruktur insbesondere in der Art einer beidseitigen mehrfach konischen Sägezahnprofilierung versehen ist, wobei bevorzugt auch sowohl innen als auch außen eine relativ feinere Struktur umfassend eine kraftschlüssig wirkenden Oberflächenstruktur mit erhöhtem Haftreibkoeffizient insbesondere durch Laserstrukturierung oder Nanostrukturierung oder chemische Strukturierung vorgesehen ist. Beispielsweise ist eine konisch geformte Zwischenachstülle mit balliger Kammprofilierung vorgesehen.

Die vorliegende Erfindung steht auch im Zusammenhang mit einem Herstellungsverfahren betreffend einzelne Zwischenelemente (insbesondere die hier im Einzelnen beschriebenen Typen) bzw. eine/die verschleißmindernde Zwischenelementanordnung bzw. ein damit ausgestattetes verschleißgemindertes Industriegetriebe. In einem ersten **Schritt S1** erfolgt ein Bereitstellen einer Grundform bzw. eines bevorzugt einstückigen Grundkörpers eines (separat bereitstellbaren) Zwischenelements 10a, welches insbesondere aufgrund des Material und/oder der Härte und der daran vorzunehmenden Strukturierung eingerichtet ist zur verschleißmindernden Anordnung zwischen Achse und Achsaufnahme. In einem weiteren **Schritt S2** erfolgt das Einbringen einer formschlüssig wirkenden Struktur in zumindest einem außenliegenden Oberflächenabschnitt 10.1a, insbesondere durch Sägezahnprofilierung oder Feingewindeschneiden. In einem weiteren **Schritt S3** erfolgt das Einbringen einer kraftschlüssig wirkenden Struktur in zumindest einem innenliegenden Oberflächenabschnitt 10.1b, insbesondere durch Laserstrukturieren und/oder durch Nanostrukturieren und/oder durch chemische Strukturierung. In der Folge kann in einem weiteren **Schritt S4** ein jeweils gewünschtes Zwischenelement bereitgestellt werden und beispielsweise durch die hier an anderer Stelle erwähnten Schritte zwischen Achse und Achsaufnahme montiert werden, beispielsweise auch in bereits verbauten oder betriebenen Getrieben.

Im Folgenden werden Besonderheiten der Erfindung unter Bezugnahmen auf einzelne Figuren bzw. Ausführungsbeispiele erläutert.

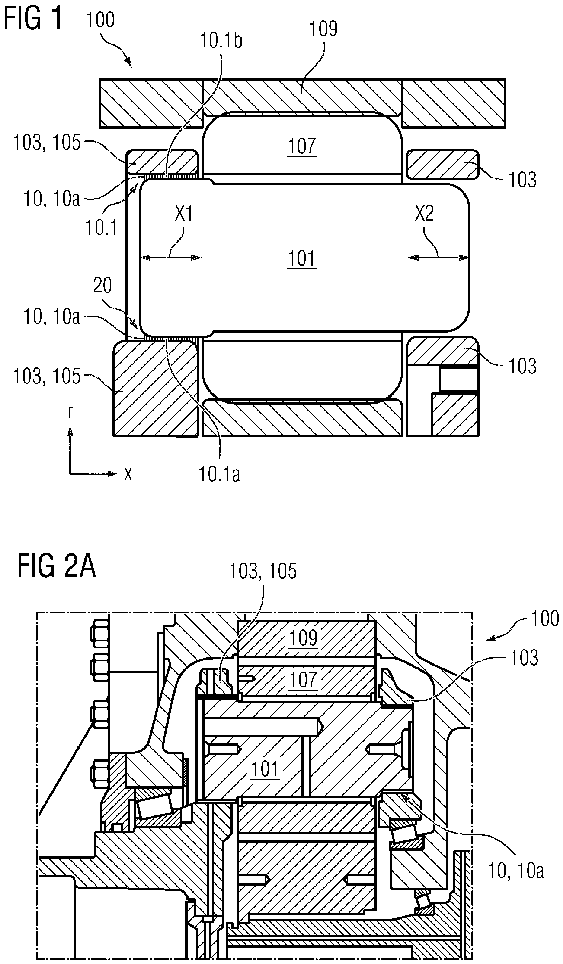

In **Fig. 1** ist eine beispielhafte Anwendung/Verwendung der erfindungsgemäßen Zwischenelementanordnung 10 gezeigt (hier ist exemplarisch ein einzelnes Zwischenelement 10a an einem der Enden der Achse angedeutet), unter Bezugnahme auf einen Planetenträger 105 mit Achsaufnahme 103 und daran jeweils axialfest in einem oder zwei Axialabschnitten gelagerten Planetenachsen 101. Das jeweilige Planetenrad 107 wird mittels des Planetenträgers 105 an einer vordefinierten Axialposition gehalten und im Planetenhohlrad 109 umlaufend geführt. In den folgenden Figuren werden unterschiedliche Ausführungsbeispiele gezeigt, welche beispielsweise auch bei einem Getriebe bzw. einer Einbausituation wie in Fig. 1 gezeigt implementiert werden können, wahlweise an einem oder beiden Achsenden bzw. Kontaktbereichen zwischen Achse und Achsaufnahme. Wie schon weiter oben erläutert, kann die Einbausituation wahlweise auch abweichend gewählt werden, beispielsweise an einer anderen Stelle oder in einer anderen Getriebeart.

In den **Figuren 2A** bis **2F** wird eine Ausgestaltung wenigstens eines Zwischenelements 10a der Zwischenelementanordnung 10 als geschlitzte Hülse veranschaulicht: Das Zwischenelement 10a liegt in Ausgestaltung als Hülse mit außen formschlüssiger Oberfläche (insbesondere Sägezahnprofil oder Feingewinde) vor und ist gegen die (axiale) Ausdrückrichtung zwischen Achse und Achsaufnahme verankert, wobei die Hülse bevorzugt gehärtet oder nitriert ist. Die Außenmantelfläche der Hülse kann sich in die Achsaufnahme (z.B. Gussbohrung) pressen und einen Verschleißschutz für die Achsaufnahme bereitstellen (z.B. für einen Planetenträger aus Gussmaterial, bzw. für einen Gussträger). An der Innenmantelfläche der Hülse seitens der Achse ist ein kraftschlüssiger Presssitz vorgesehen, mit bevorzugt laserstrukturierter Oberfläche, wobei die Oberfläche bevorzugt martensitisch hart ist. Das Zwischenelement 10a stellt dabei wenigstens eine an der radial außenliegenden Kontaktfläche zumindest im Wesentlichen formschlüssige Verbindung bereit und wenigstens eine an der radial innenliegenden Kontaktfläche zumindest im Wesentlichen kraftschlüssige Verbindung mit hohem Reibkoeffizienten bereit (insbesondere laserstrukturierte Innenmantelfläche). Die Hülse besteht beispielsweise aus Blechmaterial (gebogen) oder ist als Hülse gefertigt, wobei die Positionstoleranz der Achsverbindung zumindest annähernd identisch bleiben kann.

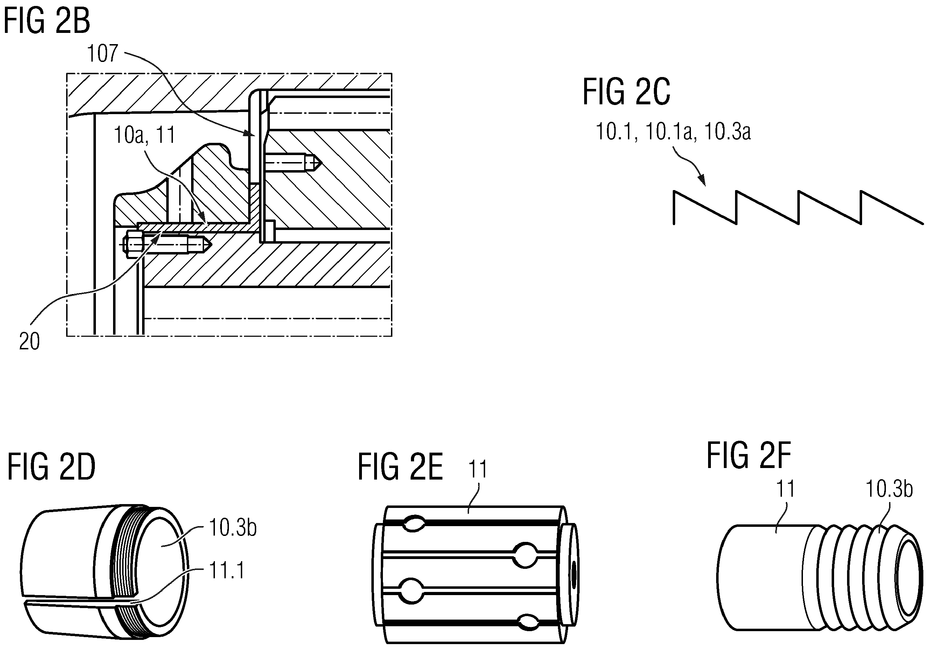

In **Fig. 2A** ist eine Zwischenelementanordnung 10 umfassend zwei als Hülse 11 ausgestaltete (bzw. auf der Grundform einer Hülse basierende) Zwischenelemente 10a in zwei unterschiedlichen Axialabschnitten an den beiden Enden einer/der Planetenachse. In **Fig. 2B** ist eine Detailansicht eines der beiden verschleißgemindert gelagerten Axialabschnitte gezeigt. In **Fig. 2C** ist eine/die Oberflächenstruktur einer äußeren Mantelfläche des entsprechenden Zwischenelements 10a veranschaulicht, nämlich ein Sägezahnprofil mit nach links größerem/stärkerem Formschluss als nach rechts (also bei Ansicht auf die Figur 2C nach links gerichteter Kraft). In **Fig. 2D** ist ein erstes Ausführungsbeispiel eines hülsenartigen Zwischenelements gezeigt, wobei das Zwischenelement einen Schlitz 11.1 aufweist bzw. in axialer Richtung durchgängig geschlitzt ist. In **Fig. 2E** ist ein weiteres Ausführungsbeispiel eines hülsenartigen Zwischenelements gezeigt. In **Fig. 2F** ist ein weiteres Ausführungsbeispiel eines hülsenartigen Zwischenelements gezeigt, bei welchem die strukturierte äußere Oberfläche nur über einen Abschnitt (ca. 50%) der absoluten Länge der Außenmantelfläche vorliegt, nämlich in einem bei bestimmungsgemäßer Anordnung um die Achse weiter axial innenliegenden Abschnitt.

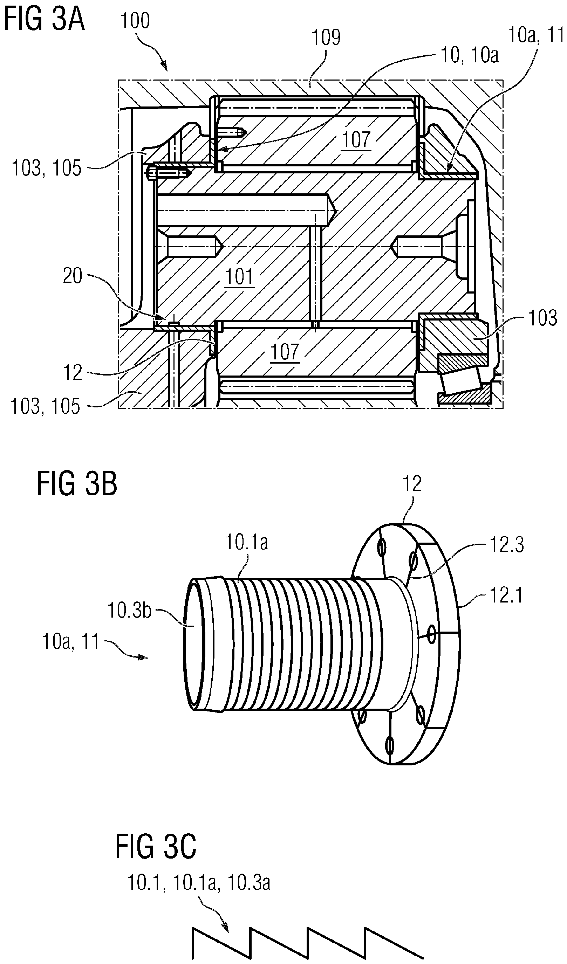

In den **Figuren 3A** bis **3C** wird eine Ausgestaltung wenigstens eines Zwischenelements 10a der Zwischenelementanordnung 10 als Hülse mit integrierter Anlauffläche veranschaulicht: Das Zwischenelement 10a liegt in Ausgestaltung als Hülse mit außen formschlüssiger Oberfläche (insbesondere Sägezahnprofil oder Feingewinde) vor und ist gegen die (axiale) Ausdrückrichtung zwischen Achse und Achsaufnahme verankert, wobei die Hülse bevorzugt gehärtet oder nitriert ist. Die Außenmantelfläche der Hülse kann sich in die Achsaufnahme (z.B. Gussbohrung) pressen und einen Verschleißschutz für die Achsaufnahme bereitstellen (z.B. für einen Planetenträger aus Gussmaterial, bzw. für einen Gussträger). Die Stirnseite der Hülse ist bevorzugt gleitlagerbeschichtet. An der Innenmantelfläche der Hülse seitens der Achse ist ein kraftschlüssiger Presssitz vorgesehen, mit bevorzugt laserstrukturierter Oberfläche, wobei die Oberfläche bevorzugt martensitisch hart ist. Die Hülse kann in geschlitzter Form vorliegen und eine Vielzahl von Funktionen erfüllen, insbesondere einen formschlüssigen Verschleißschutz an der Achsaufnahme (z.B. Gussträger) und das Bereitstellen von Trägermaterial für Laser- oder Auftragsschweißen einer/der Anlaufkontur. Dabei kann eine Präzisionsbearbeitung insbesondere bezüglich einer Schlüsselweite an der Anlaufkontur und der Achsaufnahme (nur ebene Spiegelfläche) entfallen, und es kann auf vergleichsweise einfache Weise eine verdrehgesicherte Anordnung bereitgestellt werden.

In **Fig. 3A** ist eine Ausführungsform mit zwei spiegelverkehr zueinander eingebauten Hülsen mit integrierter Anlauffläche bzw. -scheibe veranschaulicht. In **Fig. 3B** sind im Detail die über die (zumindest annähernd gesamte Länge vorliegende) strukturierte Außenmantelfläche 10.1a und das Anlaufflächenelement 12 gezeigt, wobei das Anlaufflächenelement wenigstens eine gleitlagerbeschichtete Stirnseite 12.1 und einen Vielzahl von Radialschlitzen 12.3 mit Entspannungsbohrungen aufweist. In **Fig. 3C** ist eine/die Oberflächenstruktur einer äußeren Mantelfläche des entsprechenden Zwischenelements 10a veranschaulicht, nämlich ein Sägezahnprofil mit nach links größerem/stärkerem Formschluss als nach rechts.

Insbesondere die hier als Hülse beschriebene Ausgestaltung des jeweiligen Zwischenelements 10a kann dabei auch in der Art einer Klemmverbindung zwischen Achse und Achsaufnahme angeordnet sein.

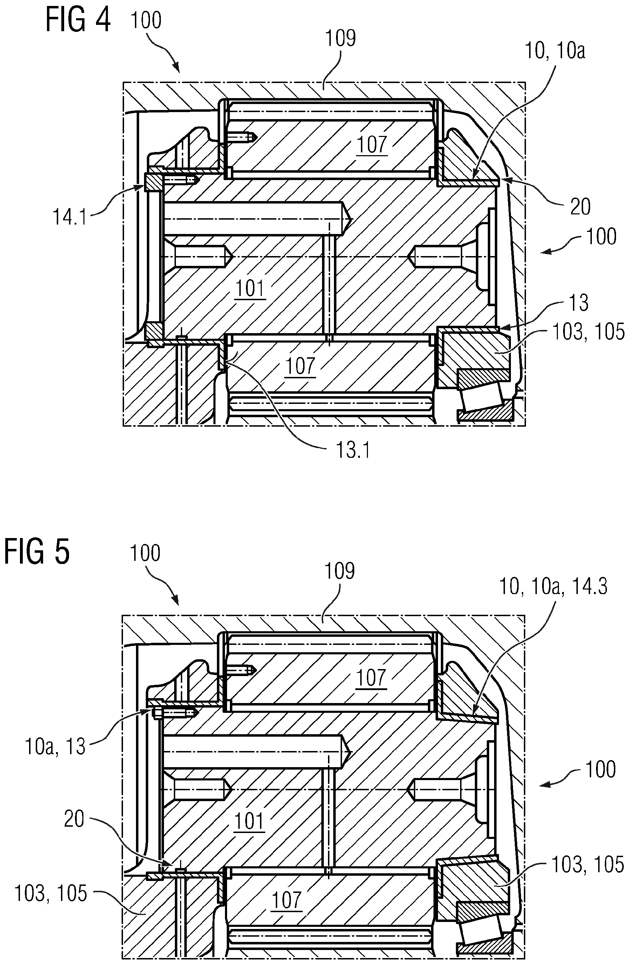

In der **Fig. 4** wird eine Ausgestaltung wenigstens eines Zwischenelements 10a der Zwischenelementanordnung 10 als L-Buchse mit Innennutmutter veranschaulicht: Die L-Buchse mit Nutmutter 14.1 weist eine formschlüssig (insbesondere mit Sägezahnprofil oder Feingewinde) ausgestaltete Außenmantelfläche auf und ist dabei gegen die axiale Ausdrückrichtung gesichert und besteht bevorzugt aus gehärtetem oder nitriertem Material. Die Außenmantelfläche der L-Buchse kann sich dabei in die Achsaufnahme (z.B. Gussbohrung) pressen und einen sehr effektiven Verschleißschutz für die Achsaufnahme bereitstellen (z.B. für einen Planetenträger aus Gussmaterial, bzw. für einen Gussträger). Bevorzugt ist eine/die Stirnseite in der Art bzw. hinsichtlich der Funktionalität einer Anlaufscheibe beschichtet (insbesondere in der Art einer Gleitlagerbeschichtung). Vorteilhaft kann dabei beispielsweise auch ein Sicherungsring der Achse entfallen. Eine Axiallast kann an wenigstens einer innenliegenden Fläche durch Kraftschluss übertragen werden (bevorzugt mittels Laserstruktur, insbesondere sägezahnartig), wobei eine axiale Sicherung durch eine/die innenliegende Nutmutter in der L-Buchse erfolgen kann. Ein Vorspannen der Achse kann hydraulisch gesetzt oder gezogen sein. Wahlweise kann eine geschlitzte Ausgestaltung in Verbindung mit einer konischen Bohrung vorgesehen sein, wobei die jeweilige Anlaufkontur bevorzugt ballig profiliert ist zum effektiven Vorhalten einer plastischen Deformation.

In der **Fig. 5** wird eine Ausgestaltung wenigstens eines Zwischenelements 10a der Zwischenelementanordnung 10 als L-Buchse in Kombination mit einem Konus 14.3 veranschaulicht: Mittels eines/des konischen Achssitzes können auch vergleichsweise große Axiallasten auf sehr sichere/robuste Weise übertragen werden, wobei der Konus selbsthemmend ausgestaltet sein kann oder durch eine entsprechende Sicherung gegen Herausziehen/-wandern gesichert werden kann. Ein entsprechender Ring kann in der Art wie ein Seegering geschlitzt sein. Wahlweise kann eine Entlastungsnut vorsehen sein. Die Ausgestaltung gemäß Fig. 5 veranschaulicht auch, dass die vorliegende Erfindung auch in Abhängigkeit von unterschiedlichen Anforderungen an eine Axialsicherung bzw. an die Fähigkeit der Übertragung von vergleichsweise hohen Axiallasten individuell für spezifische Anwendungsfälle vergleichsweise variabel optimierbar ist.

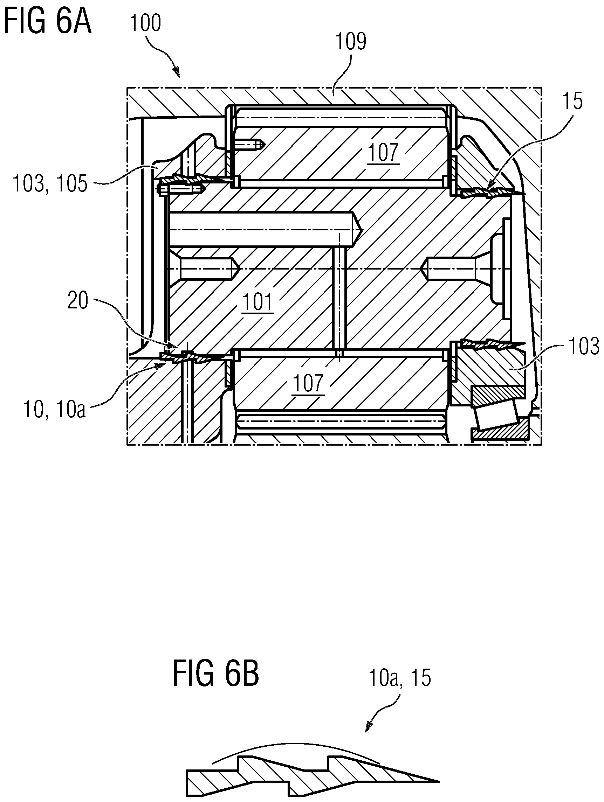

In den **Figuren 6A** und **6B** wird eine Ausgestaltung wenigstens eines Zwischenelements 10a der Zwischenelementanordnung 10 als konisch geformte Zwischenachstülle 15veranschaulicht: Die Zwischenachstülle (gemäß der vorliegenden Offenbarung auch als Achsdübel oder Achsanker bezeichnet, wobei der Begriff "Dübel" hier insbesondere auf die formschlüssige Kontur abstellen soll) insbesondere in geringfügig konischer Ausgestaltung kann durch Einschlagen der Achse zu einer lokalen plastischen Verformung der Achsaufnahme bzw. Trägerbohrung führen und das Material der Zwischenachstülle bzw. das Dübelmaterial spreizen. Dabei besteht Formschluss bestimmungsgemäß vornehmlich zwischen Achsaufnahme und Achstülle/Dübel (also an der außenliegenden Kontaktfläche des Zwischenelements), so dass die Anordnung gegen axiales Herausziehen/-wandern gesichert ist.

Eine Demontage kann z.B. durch Herausschrauben spiralförmiger Dübel und/oder mittels Drucköl (hydraulisch) erfolgen. Das Zwischenelement wirkt dabei jedoch gleichwohl hauptsächlich kraft- bzw. reibschlüssig (insbesondere sowohl innen als auch außen), wobei die Radialkräfte an den Bohrungsenden bevorzugt stetig abnehmen (bevorzugt ballige Kammprofilierung, Kammspitzen geglättet), wobei ein Sicherungsring entfallen kann, und wobei die Achseinspannung vorteilhaft verlängert werden kann. Dabei kann der Achsdübel 15 auch einseitig verdickt sein, um Positionstoleranzen der Trägerbohrungen durch Orientierung bei der Montage auszugleichen. Alternativ oder zusätzlich zur konischen Ausführung kann der Reibwert auch durch Laser- oder Nanostrukturierung und/oder chemische Strukturierung erhöht werden, wahlweise auch in Kombination mit einer Rändelung bzw. Formgebung gemäß einer Rändelung (z.B. durch Fräsen, Prägen, Drücken). Bezüglich einer potentiellen Relativbewegung nach axial außen kann die proportionale Haftreibungskraft dabei vorteilhaft erhöht werden, wobei auch eine vorteilhaft hohe Druckfestigkeit des Trägerwerkstoffes ausgenutzt werden kann. Um eine Verformung zu erleichtern, kann der Dübel 15 wahlweise auch geschlitzt oder segmentiert sein. Der Werkstoff der Achtsülle ist bevorzugt gehärtet oder nitriert, wahlweise mit oder ohne montageerleichternder Beschichtung. Ein Aufziehen der Bohrungen kann z.B. induktiv oder durch Kaltfügen erfolgen. Die Achsenden können dabei z.B. gerade zylindrisch, konisch oder schraubenförmig profiliert ausgeführt sein. Randnotiz: Fig. 6B veranschaulicht dabei nur einen Teil der umlaufend ringartig ausgestalteten Zwischenachstülle 15 im Schnittbild.

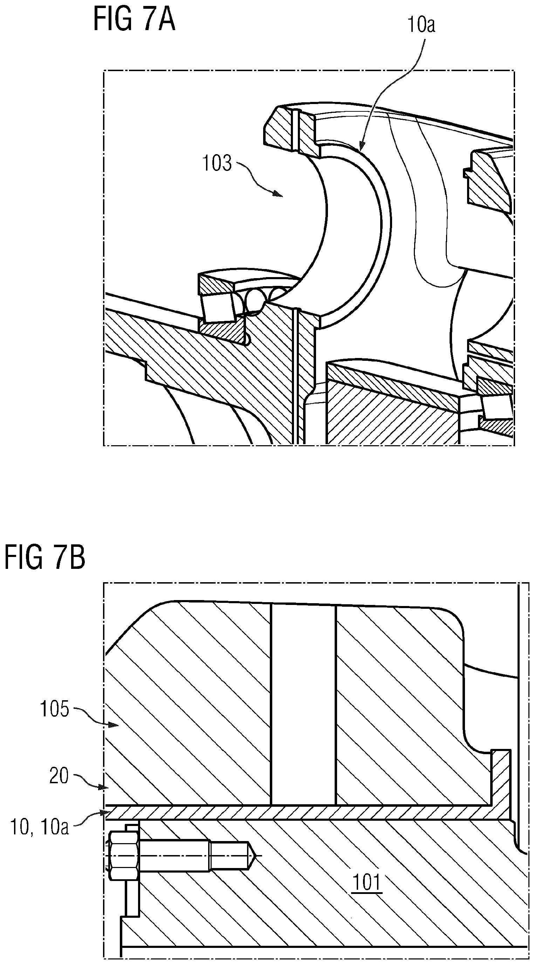

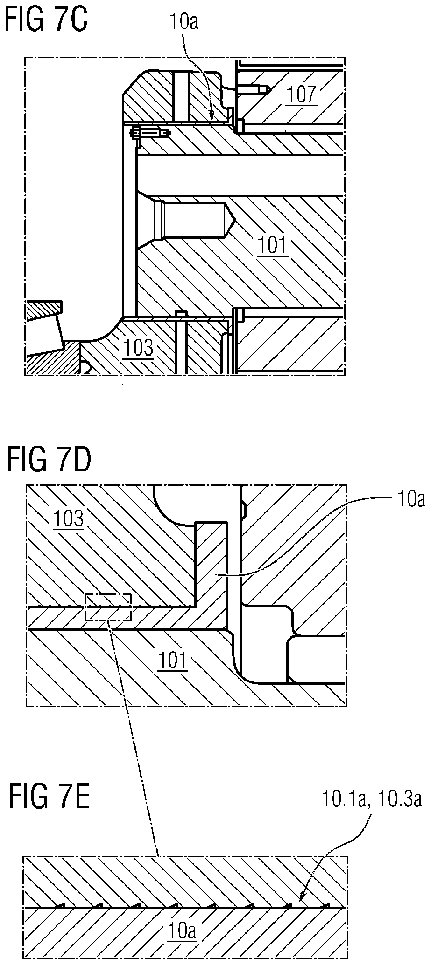

In den **Figuren 7A** bis **7E** wird eine Ausgestaltung wenigstens eines Zwischenelements 10a der Zwischenelementanordnung 10 als Hülse 11 mit integrierter Anlaufkontur 12 in unterschiedlichen Ansichten der Einbausituation veranschaulicht: In **Fig. 7A** ist die Achsaufnahme 103 gezeigt. In **Fig. 7B** ist das wenigstens eine Zwischenelement 10a in bestimmungsgemäßer Anordnung zwischen Achse und Achsaufnahme in starker Vergrößerung gezeigt. In **Fig. 7C** sind die Achse und die Achsaufnahme über die vollständige Dicke der Achse sichtbar. In **Fig. 7D** und **Fig. 7E** ist im Detail eine/die außenliegende Oberflächenstruktur 10.1a mit für Formschluss eingerichtetem Flächenabschnitt 10.3a des wenigstens einen Zwischenelements der Zwischenelementanordnung gezeigt.

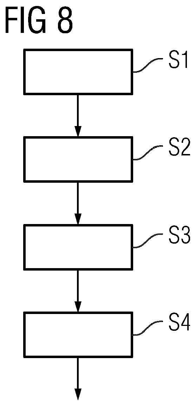

In **Fig. 8** sind einzelne Schritte eines Herstellungsverfahrens einer hier beschriebenen Zwischenelementanordnung 10 schematisch angedeutet, nämlich: Schritt S1 Bereitstellen einer Grundform bzw. eines Grundkörpers eines separaten Zwischenelements; Schritt S2 Einbringen einer formschlüssig wirkenden Struktur; Schritt S3 Einbringen einer kraftschlüssig wirkenden Struktur; Schritt S4 Montage des jeweiligen Zwischenelements. Das Herstellungsverfahren kann wahlweise die Schritte S1 bis S3 oder alle Schritte S1 bis S4 umfassen, je nachdem, ob die Herstellung lediglich die einzelnen Zwischenelemente 10a oder die gesamte Zwischenelementanordnung 10 bzw. das entsprechende Industriegetriebe 100 betrifft.

### Bezugszeichenliste

- 10: Zwischenelementanordnung
- 10a: Zwischenelement
- 10.1: strukturierte Oberfläche
- 10.1a, 10.1b: radial außenliegende/r bzw. innenliegende/r Oberfläche(nabschnitt)
- 10.3a: formschlüssiger Abschnitt
- 10.3b: kraftschlüssiger Abschnitt
- 11: Hülse, insbesondere geschlitzte Hülse
- 11.1: Schlitz
- 12: Anlaufkontur bzw. Anlauffläche bzw. Anlaufflächenelement
- 12.1: gleitlagerbeschichtete Oberfläche/Stirnseite
- 12.3: Radialschlitze oder dergleichen Ausnehmungen
- 13: L-Buchse, insbesondere mit Innen(nut)mutter, insbesondere in Kombination mit Konus
- 13.1: gleitlagerbeschichtete Oberfläche/Stirnseite
- 14.1: Innenmutter
- 14.3: Konus (konischer Achssitz)
- 15: Zwischenachstülle, insbesondere konisch geformt
- 20: axialfeste form-/kraftschlüssige Verbindung zwischen Achse und Achsaufnahme
- 100: Industriegetriebe
- 101: Achse, insbesondere Planetenachse
- 103: Achsaufnahme, z.B. Gussbohrung, insbesondere Planetenträgerbohrung
- 105: Planetenträger
- 107: Planet bzw. Planetenrad
- 109: Planetenhohlrad mit Innenverzahnung
- S1: Bereitstellen einer Grundform bzw. eines Grundkörpers eines separaten Zwischenelements
- S2: Einbringen einer formschlüssig wirkenden Struktur
- S3: Einbringen einer kraftschlüssig wirkenden Struktur
- S4: Montage des jeweiligen Zwischenelements
- X1, X2: erster und zweiter Axialabschnitt
- x: axiale Richtung
- r: radiale Richtung

## Patentansprüche

1. Industriegetriebe (100), insbesondere Planetengetriebe, aufweisend wenigstens eine Achse (101) und wenigstens eine Achsaufnahme (103) zur axialfesten Lagerung der Achse, wobei die Achse in wenigstens einem Axialabschnitt (X1, X2) in der Achsaufnahme axialfest gelagert ist;
**dadurch gekennzeichnet, dass** zwischen Achsaufnahme (103) und Achse (101) wirkend im/in dem wenigstens einen Axialabschnitt eine verschleißmindernde Zwischenelementanordnung (10) vorgesehen ist, welche axialfest zwischen Achse und Achsaufnahme gelagert ist.

2. Industriegetriebe (100) nach Anspruch 1 **dadurch gekennzeichnet, dass** die Zwischenelementanordnung in zumindest einem Oberflächenabschnitt (10.1a, 10.1b) seitens der Achse und/oder seitens der Achsaufnahme eine strukturierte Oberfläche (10.1) aufweist und dadurch eingerichtet ist zur form- und/oder kraftschlüssigen Abstützung gegen axiale Verlagerung; und/oder wobei die Zwischenelementanordnung wenigstens ein Zwischenelement aufweist, welches axialfest zwischen Achse und Achsaufnahme im Axialabschnitt gelagert ist, und welches in zumindest einem äußeren Oberflächenabschnitt, also seitens der Achsaufnahme, eine formschlüssig wirkende strukturierte Oberfläche aufweist, welche bevorzugt eine größere Härte aufweist als die korrespondierende Oberfläche der Achsaufnahme, und in zumindest einem inneren Oberflächenabschnitt, also seitens der Achse, eine kraftschlüssig wirkende strukturierte Oberfläche aufweist; und/oder wobei die Zwischenelementanordnung in einer der folgenden Ausgestaltungen vorliegt oder wenigstens ein Zwischenelement in einer der folgenden Ausgestaltungen umfasst: geschlitzte Hülse, integriertes Anlaufflächenelement, L-Buchse mit Innenmutter, L-Buchse in Kombination mit Konus, Zwischenachstülle insbesondere konisch, ballig, gerändelt, mit einer Verzahnung versehen, schrauben- oder wellenförmig geformt; und/oder wobei die Zwischenelementanordnung wenigstens ein Zwischenelement eingerichtet zur axialen Positionierung eines Planetenrades des Industriegetriebes aufweist, insbesondere mittels integrierter Anlauffläche.

3. Industriegetriebe (100) nach Anspruch 2 **dadurch gekennzeichnet, dass** die Zwischenelementanordnung als geschlitzte Hülse ausgestaltet ist oder wenigstens ein Zwischenelement in dieser Ausgestaltung umfasst, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder Gewindes oder gerändelt versehen ist; und/oder wobei die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen ist.

4. Industriegetriebe (100) nach Anspruch 2 **dadurch gekennzeichnet, dass** die Zwischenelementanordnung als Hülse mit integriertem Anlaufflächenelement ausgestaltet ist oder wenigstens ein Zwischenelement in dieser Ausgestaltung umfasst, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder Gewindes oder gerändelt versehen ist, wobei das Anlaufflächenelement bevorzugt stirnseitig gleitlagerbeschichtet ist oder einen gleitlagerbeschichteten Kragen aufweist; und/oder wobei die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen ist.

5. Industriegetriebe (100) nach Anspruch 2 **dadurch gekennzeichnet, dass** die Zwischenelementanordnung als L-Buchse ausgestaltet ist oder wenigstens ein Zwischenelement in dieser Ausgestaltung umfasst, insbesondere als L-Buchse mit Innenmutter ausgestaltet ist oder umfassend eine L-Buchse in Kombination mit einem Konus, wobei die strukturierte Oberfläche zur formschlüssigen Abstützung in axialer Richtung in wenigstens einem Axialabschnitt außen mit einer formschlüssig wirkenden Oberflächenstruktur insbesondere in der Art eines Sägezahnprofils oder Gewindes oder gerändelt versehen ist, wobei die L-Buchse bevorzugt stirnseitig gleitlagerbeschichtet ist, wobei die L-Buchse mittels einer/der Innenmutter und/oder mittels eines/des Konus an der Achse in axialer Richtung gesichert ist; und/oder wobei die strukturierte Oberfläche zur kraftschlüssigen Abstützung in axialer Richtung in wenigstens einem Axialabschnitt innen mit einer kraftschlüssig wirkenden Oberflächenstruktur mit erhöhtem Haftreibkoeffizient insbesondere durch Laserstrukturierung versehen ist; und/oder wobei ein/der in Kombination mit der L-Buchse bereitgestellte Konus in Ausgestaltung als konischer Achssitz bereitgestellt ist, insbesondere am gegenüberliegenden Achsende einer an zwei Axialabschnitten eingefassten Achse.

6. Industriegetriebe (100) nach Anspruch 2 **dadurch gekennzeichnet, dass** die Zwischenelementanordnung als insbesondere konisch geformte Zwischenachstülle ausgestaltet ist oder wenigstens ein Zwischenelement in dieser Ausgestaltung umfasst, wobei die strukturierte Oberfläche zur formschlüssigen Abstützung in axialer Richtung sowohl auf einer/der Innenseite als auch auf einer/der Außenseite der Zwischenachstülle vorgesehen ist und mit einer formschlüssig wirkenden Oberflächenstruktur insbesondere in der Art einer beidseitigen mehrfach konischen Sägezahnprofilierung für eine schraubenartige Verzahnung versehen ist, und wobei bevorzugt auch sowohl innen als auch außen eine relativ feinere Struktur umfassend eine kraftschlüssig wirkenden Oberflächenstruktur mit erhöhtem Haftreibkoeffizient insbesondere durch Laserstrukturierung oder Nanostrukturierung oder chemische Strukturierung vorgesehen ist; und/oder wobei ein/das als konisch geformte Zwischenachstülle ausgestaltetes Zwischenelement der Zwischenelementanordnung eine ballige Kammprofilierung aufweist.

7. Industriegetriebe (100) nach einem der Ansprüche 2 bis 6 **dadurch gekennzeichnet, dass** die Zwischenelementanordnung oder ein einzelnes Zwischenelement davon aus mehreren Lagen ausgebildet ist, insbesondere aus mehreren Lagen mit jeweils unterschiedlicher/individueller Härte oder aus unterschiedlichen Werkstoffen oder Werkstoffpaarungen mit jeweils unterschiedlicher/individueller Härte insbesondere auch ungleich der Härte des Werkstoffs der Achse oder der Achsaufhahme; und/oder wobei innerhalb wenigstens eines Oberflächenabschnitts des Zwischenelements eine Liniendichte und/oder Richtung der Struktur und/oder Intensität und Form der Struktur individualisiert ist.

8. Industriegetriebe (100) nach einem der vorhergehenden Ansprüche **dadurch gekennzeichnet, dass** das Industriegetriebe als Planetengetriebe ausgestaltet ist, wobei eine/die Achsaufnahme in einem Planetenträger des Planetengetriebes vorgesehen ist, insbesondere in Ausgestaltung als Planetenträgerbohrung, und wobei wenigstens ein Zwischenelement der Zwischenelementanordnung formschlüssig gegen axiale Relativbewegung zwischen Planetenträger bzw. Achsaufnahme und Achse angeordnet ist bzw. dort verschleißmindernd wirkt.

9. Industriegetriebe (100) nach einem der vorhergehenden Ansprüche **dadurch gekennzeichnet, dass** das Industriegetriebe in einem Triebstrang einer Windenergieanlage verbaut ist oder dafür konfiguriert ist, insbesondere in Ausgestaltung als Planetengetriebe oder umfassend wenigstens eine Planetengetriebestufe.

10. Industriegetriebe (100) nach einem der vorhergehenden Ansprüche **dadurch gekennzeichnet, dass** die jeweilige Achse in zwei Axialabschnitten (X1, X2) in der Achsaufnahme axialfest gelagert ist, wobei die jeweilige Achse in einem ersten Axialabschnitt mittels eines ersten Zwischenelements der Zwischenelementanordnung axialfest gelagert ist und in einem zweiten Axialabschnitt mittels eines zweiten Zwischenelements der Zwischenelementanordnung axialfest gelagert ist, wobei die Zwischenelemente an wenigstens einer innenliegenden Oberfläche jeweils zumindest oder im Wesentlichen kraftschlüssig an der Achse anliegen und an wenigstens einer außenliegenden Oberfläche jeweils zumindest oder im Wesentlichen formschlüssig an der Achse anliegen; wobei das erste und zweite Zwischenelement wahlweise von demselben Typ oder unterschiedlichen Typs sind, insbesondere ausgewählt aus der folgenden Gruppe von Zwischenelementtypen: Hülse wahlweise mit Anlaufflächenelement, L-Buchse wahlweise in Kombination mit Innenmutter und/oder Konus.

11. Verfahren zum Herstellen einer verschleißmindernden Zwischenelementanordnung zur Verwendung in einem Industriegetriebe (100) in wenigstens einem Axialabschnitt zwischen wenigstens einer Achse und wenigstens einer Achsaufnahme zur axialfesten Lagerung der Achse in der Achsaufnahme, insbesondere zur Verwendung an einem Planetenträger eines Planetengetriebes, wobei in zumindest einem Oberflächenabschnitt wenigstens eines Zwischenelements der Zwischenelementanordnung seitens der Achse und/oder seitens der Achsaufnahme eine strukturierte Oberfläche eingebracht wird, die eingerichtet ist zur form- und/oder kraftschlüssigen Abstützung gegen axiale Verlagerung.

12. Verfahren nach dem vorhergehenden Anspruch **dadurch gekennzeichnet, dass** in zumindest einem Oberflächenabschnitt einer innenliegenden Oberfläche/Mantelfläche des wenigstens einen Zwischenelements eine im Wesentlichen kraftschlüssig wirkende Oberfläche durch wenigstens einen der folgenden Schritte eingebracht wird, wobei die strukturierte Oberfläche bevorzugt in Abhängigkeit von wenigstens einem vordefinierten/vordefinierbaren spezifischen Erhabenheits- und/oder Dichteparameter generiert wird, insbesondere in wellen- oder schlangenlinienförmiger Struktur oder in schuppenartiger Struktur: Laserstrukturieren, Nanostrukturieren, chemische Strukturierung; und/oder wobei in zumindest einem Oberflächenabschnitt einer außenliegenden Oberfläche/Mantelfläche des wenigstens einen Zwischenelements eine im Wesentlichen formschlüssig wirkende Oberfläche durch wenigstens einen der folgenden Schritte eingebracht wird: Sägezahnprofilierung, Feingewindeschneiden; und/oder wobei beim Einbringen wenigstens eines Zwischenelements der Zwischenelementanordnung zwischen Achse und Achsaufnahme die entsprechende Bauteilpaarung gespreizt wird.

13. Verschleißmindernde Zwischenelementanordnung (10) für ein Industriegetriebe (100) aufweisend wenigstens eine Achse und wenigstens eine Achsaufnahme zur Lagerung der Achse, wobei die Zwischenelementanordnung zur Anordnung zwischen Achsaufnahme und Achse eingerichtet ist, wobei wenigstens ein verschleißminderndes Zwischenelement der Zwischenelementanordnung hergestellt ist durch wenigstens einen der folgenden Schritte: Bereitstellen einer Grundform eines bevorzugt einstückigen Grundkörpers eines separaten Zwischenelements eingerichtet zur verschleißmindernden Anordnung zwischen Achse und Achsaufnahme, Einbringen wenigstens einer zur form- und wahlweise auch kraftschlüssigen Abstützung gegen axiale Relativbewegung eingerichteten strukturierten Oberfläche in zumindest einem Oberflächenabschnitt wenigstens eines Zwischenelements der Zwischenelementanordnung durch Laserstrukturieren oder Nanostrukturieren oder chemische Strukturierung, insbesondere zumindest innenliegend seitens der Achse, und wahlweise auch Einbringen wenigstens einer für formschlüssige Abstützung gegen axiale Relativbewegung eingerichteten strukturierten Oberfläche in zumindest einem Oberflächenabschnitt wenigstens eines Zwischenelements der Zwischenelementanordnung durch Sägezahnprofilierung oder Feingewindeschneiden, insbesondere zumindest außenliegend seitens der Achsaufnahme; insbesondere hergestellt durch ein Verfahren gemäß Anspruch 11 oder 12.

14. Verwendung einer verschleißmindernden Zwischenelementanordnung (10) in einem Industriegetriebe (100) zwischen einer Achse und einer Achsaufnahme zur Lagerung der Achse, insbesondere in einem Planetengetriebe, wobei die Zwischenelementanordnung (10) mit wenigstens einer für Formschluss eingerichteten Außenmantelfläche, die in wenigstens einem Außenmantelflächenabschnitt eine Formschlusskontur aufweist, formschlüssig in der Achsaufnahme zur Anlage kommt, wobei die Zwischenelementanordnung (10) mit wenigstens einer für Kraftschluss eingerichteten Innenmantelfläche, die in wenigstens einem Innenmantelflächenabschnitt eine kraftschlüssig wirkende Struktur aufweist, kraft-/reibschlüssig auf der Achse zur Anlage kommt, insbesondere mit der Zwischenelementanordnung umfassend wenigstens ein Zwischenelement in Ausgestaltung als Hülse oder L-Buchse jeweils mit Anlauffläche, insbesondere für bereits bestehende und verbaute Getriebe/-komponenten, insbesondere in wenigstens einer Planetengetriebestufe eines Triebstrangs einer Windenergieanlage.

15. Verwendung wenigstens eines Zwischenelements (10a) einer verschleißmindernden Zwischenelementanordnung (10) in einem Industriegetriebe (100) zwischen einer Achse und einer Achsaufnahme zur Lagerung der Achse, insbesondere jeweils in ein oder zwei Axialabschnitten zwischen Planetenachsen und einem Planetenträger eines Planetengetriebes, wobei das wenigstens eine Zwischenelement mit wenigstens einer für Formschluss eingerichteten Außenmantelfläche, die in wenigstens einem Außenmantelflächenabschnitt eine insbesondere sägezahn- oder feingewindeartige Formschlusskontur aufweist und eine relativ größere Härte aufweist als die Achsaufnahme, formschlüssig in der Achsaufnahme sitzt, wobei das wenigstens eine Zwischenelement (10a) mit wenigstens einer für Kraftschluss eingerichteten Innenmantelfläche, die in wenigstens einem Innenmantelflächenabschnitt eine kraftschlüssig wirkende Struktur, insbesondere laserstrukturierte Struktur, aufweist, kraft-/reibschlüssig auf der Achse sitzt, wobei das wenigstens eine Zwischenelement bevorzugt thermisch und/oder durch Einschlagen in die Achsaufnahme montiert ist/wird, insbesondere mit dem wenigstens einen Zwischenelement in Ausgestaltung als Hülse oder L-Buchse oder Zwischenachstülle jeweils mit Anlauffläche, insbesondere in wenigstens einer Planetengetriebestufe eines Triebstrangs einer Windenergieanlage.
